# EUROPÄISCHE PATENTSCHRIFT

(11) **EP 2 406 769 B1**
(45) Veröffentlichungstag und Bekanntmachung des Hinweises auf die Patenterteilung: **18.06.2014**
(21) Anmeldenummer: 10710794.8
(22) Anmeldetag: 04.03.2010
(51) Int. Cl.: G06T 7/00, H04N 13/00

(54) **VERFAHREN UND VORRICHTUNG ZUR REDUKTION DES SPEICHERBEDARFS BEI DER BESTIMMUNG VON DISPARITÄTSWERTEN FÜR MINDESTENS ZWEI STEREOSKOPISCH AUFGENOMMENE BILDER**
METHOD AND APPARATUS FOR REDUCING THE MEMORY REQUIREMENT FOR DETERMINING DISPARITY VALUES FOR AT LEAST TWO STEREOSCOPICALLY RECORDED IMAGES
PROCÉDÉ ET DISPOSITIF POUR RÉDUIRE LE BESOIN DE MÉMOIRE LORS DE LA DÉTERMINATION DE VALEURS DE DISPARITÉ POUR AU MOINS DEUX IMAGES PRISES DE MANIÈRE STÉRÉOSCOPIQUE

(30) Priorität: 12.03.2009 DE 102009012441
(43) Veröffentlichungstag der Anmeldung: 18.01.2012
(73) Patentinhaber: Deutsches Zentrum für Luft- und Raumfahrt e.V., 51147 Köln (DE)
(72) Erfinder: HIRSCHMUELLER, Heiko, 80993 Muenchen (DE); ERNST, Ines, 12557 Berlin (DE); BOERNER, Anko, 12489 Berlin (DE); BUDER, Maximilian, 16230 Melchow (DE); WOHLFEIL, Juergen, 10247 Berlin (DE)
(74) Vertreter: Patentanwälte Bressel und Partner mbB
(86) Internationale Anmeldenummer: PCT/EP2010/001598
(87) Internationale Veröffentlichungsnummer: WO 2010/102840

(56) Entgegenhaltungen:
- INES ERNST ET AL: "Mutual Information Based Semi-Global Stereo Matching on the GPU" 1. Dezember 2008 (2008-12-01), ADVANCES IN VISUAL COMPUTING, SPRINGER BERLIN HEIDELBERG, BERLIN, HEIDELBERG, PAGE(S) 228 - 239 , XP019112077 ISBN: 9783540896388 Zusammenfassung page 232, sections 3.2 and 3.3
- LIANG WANG ET AL: "High-Quality Real-Time Stereo Using Adaptive Cost Aggregation and Dynamic Programming" 3D DATA PROCESSING, VISUALIZATION, AND TRANSMISSION, THIRD INTERNATION AL SYMPOSIUM ON, IEEE, PI, 1. Juni 2006 (2006-06-01), Seiten 798-805, XP031079018 ISBN: 978-0-7695-2825-0
- STAN BIRCHFIELD AND CARLO TOMASI: "Depth Discontinuities by Pixel-to-Pixel Stereo" INTERNATIONAL JOURNAL OF COMPUTER VISION, KLUWER ACADEMIC PUBLISHERS, NORWELL, US, Bd. 35, Nr. 3, 1. Januar 1999 (1999-01-01) , Seiten 269-293, XP007913059 ISSN: 0920-5691

## Beschreibung

Die Erfindung betrifft ein Verfahren und eine Vorrichtung zur Reduktion des Speicherbedarfs bei der Bestimmung von Disparitätswerten für mindestens zwei stereoskopisch aufgenommene Bilder.

In der Stereobildverarbeitung werden aus zwei oder mehreren Bildern, die aus unterschiedlichen Perspektiven aufgenommen werden, Tiefeninformationen berechnet, da diese bei der Projektion einer Szene auf eine einzelne Kamera verloren gegangen sind. Tiefeninformationen werden in der Stereobildverarbeitung oft auch mit Hilfe von Disparitäten ausgedrückt, welche die Verschiebung ausdrückt, die ein korrespondierender Pixel in einem Bild von einem anderen Standpunkt aus erfährt und die von der Entfernung (der Tiefe) des zugehörigen Szenenpunktes abhängig ist. Zur Bestimmung von Disparitäten in der Stereobildverarbeitung existieren globale und lokale Verfahren. Globale Verfahren liefern dabei in der Regel eine deutlich bessere Qualität der Disparitätsbestimmung als lokale Verfahren. Allerdings benötigen globale Verfahren einen größeren Rechenaufwand und mehr temporären Arbeitsspeicher als lokale Verfahren. Dies gilt insbesondere bei großen Bildern und großen Disparitätsbereichen. Lokale Verfahren liefern im Gegensatz dazu eine weniger gute Qualität bei der Disparitätsbestimmung, benötigen jedoch einen wesentlich geringeren Rechenaufwand und Speicherbedarf.

In "Hirschmüller, H. (2008), Stereo Processing by Semi-Global Matching and Mutual Information, in IEEE Transactions on Pattern Analysis and Machine Intelligence, Volume 30(2), February 2008, pp. 328-341" wird ein so genanntes semi-globales Matching (SGM)-Verfahren vorgestellt. Das SGM-Verfahren kombiniert die Vorteile von globalen und lokalen Ansätzen zur Bestimmung von Disparitäten. Es ist von der Qualität der Ergebnisse vergleichbar mit den derzeit besten (zumeist globalen) Verfahren. Der notwendige Rechenaufwand ist jedoch wesentlich geringer als bei gängigen globalen Verfahren mit qualitativ vergleichbaren Ergebnissen. Das SGM-Verfahren wird derzeit bereits in vielen Anwendungen eingesetzt und ist u.a. in einem Field Programmable Gate Array (FPGA) und auf einer Graphical Processing Unit (GPU) implementiert.

Das SGM-Verfahren setzt eine bekannte Epipolargeometrie der verwendeten Kameras voraus. Es kann in mehrere Prozessschritte unterteilt werden, von denen einige, abhängig von der Anwendung, optional sind.

In einem ersten Schritt erfolgt für jeden Pixel eines Ursprungbilds eine Berechnung von Unähnlichkeitskosten mit Hilfe einer Kostenfunktion, die auf so genannten Mutual Information (MI) oder auch auf anderen Kosten, wie zum Beispiel Absolute Differenzen, basieren kann. Es sind aber auch pixelbasierte Unähnlichkeitsmaße vorstellbar, die auf der Intensität der betrachteten Pixel basieren, beispielsweise der sogenannte sampling insensitive measure, der in "S. Birchfeld and C. Tomasi, Depth discontinuities by pixel-to-pixel stereo, in Proceedings oft he Sixth IEEE International Conference on Computer Vision, Mumbai, India, January 1998, pp. 1073-1080" vorgestellt wird. Eine weitere Kostenfunktion wird in "Zabih, R and Woodfill, J. Non-parametric local transforms for computing visual correspondance. Proceedings of the European Conference of Computer Vision, May 1994, Stockholm, Sweden, pp. 151-158" beschrieben.

In einem zweiten Schritt findet eine Unähnlichkeitskostenaggregation statt, in dem eine globale Energiefunktion durch eine pfadweise Optimierung von allen Richtungen im Bild approximiert wird. In einem dritten Schritt erfolgt die Bestimmung einer Disparität, bei der die Aggregation von Unähnlichkeitskosten ein Minimum aufweist. Weitere Schritte umfassen die Fusion von mehr als zwei Bildern und/oder die Verfeinerung der berechneten Disparitäten.

Da die vorgestellte Erfindung eine Reduktion des Speicherbedarfs bei der Aggregation von Unähnlichkeitskosten ermöglicht, soll insbesondere dieser Prozessschritt gemäß dem Stand der Technik im Folgenden näher erläutert werden. Hierbei wird für jeden Pixel eines Ursprungsbilds, welches beispielsweise dem ersten von zwei stereoskopisch aufgenommenen Bildern entspricht, eine Disparität dmin bestimmt, indem für typischerweise acht eindimensionale Pfade, die in dem Pixel münden, in zwei Durchläufen pfadabhängige Unähnlichkeitskosten berechnet werden. Pfadabhängige Unähnlichkeitskosten für jeden Pixel werden dabei für jede Disparität eines vorbestimmten Disparitätsbereichs D, beispielsweise von 0 bis 128, berechnet. Die pfadabhängigen Unähnlichkeitskosten werden dabei mit Hilfe einer disparitätsabhängigen Kostenfunktion ermittelt, die ein pixelbasiertes Unähnlichkeitsmaß zwischen dem betrachteten Pixel des Ursprungsbilds und dem, gemäß der jeweiligen Disparität, korrespondierenden Pixels eines zweiten, stereoskopisch aufgenommenen Bilds und Unähnlichkeitskosten des Vorgängerpixels auf dem Pfad auswertet. Im ersten Durchlauf werden typischerweise pfadabhängige Unähnlichkeitskosten von vier Pfaden, die im betrachteten Pixel des Ursprungsbilds münden, berechnet. Die Richtungen der Pfade umfassen dabei die Richtungen von links, von links oben, von oben und von rechts oben. Typischerweise wird dabei das Ursprungsbild zeilenweise von oben nach unten durchlaufen, wobei jede Zeile von links nach rechts durchlaufen wird. Für jede Richtung erhält man so für jeden Pixel eine Anzahl von Unähnlichkeitskosten, die der Anzahl von betrachteten Disparitäten des vorbestimmten Disparitätsbereichs bzw. der vorbestimmten Disparitätstiefe D entspricht. Diese Unähnlichkeitskosten werden zur Laufzeit des ersten Durchlaufs aufgebaut, für die vier Richtungen getrennt für jeden Pixel und jede Disparität aufsummiert und für jeden Pixel und jede Disparität temporär zwischengespeichert. Damit ergibt sich ein Speicherbedarf von W x H x D Werten, wobei W die Anzahl der Pixel in der Bildbreite, H die Anzahl der Pixel in der Bildhöhe und D die Anzahl der betrachteten Disparitätswerte an einem Pixel bezeichnet. Im zweiten Durchlauf wird das Ursprungsbild nun zeilenweise von unten nach oben durchlaufen, wobei jede Zeile von rechts nach links durchlaufen wird. Hierbei werden pfadabhängige Unähnlichkeitskosten für jeden Pixel des Ursprungsbilds für jede Disparität aus den Richtungen rechts, rechts unten, unten, links unten berechnet und für jeden Pixel und jede Disparität zu den Kosten des ersten Durchlaufs aufsummiert. Nach Abschluss des zweiten Durchlaufs stehen somit für jeden Pixel für jede Disparität die Summe der Kosten aller acht Richtungen zur Verfügung. Die resultierende Disparität wird für jedes Pixel als die Disparität bestimmt, bei der die Summe der Kosten über alle acht Richtungen minimal ist.

Nachteilig bei dem SGM-Verfahren ist der hohe Speicherbedarf und die damit verbundene hohe Speicherbandbreite, die eine Echtzeitfähigkeit des Verfahrens und eine einfache Implementierung auf einer entsprechenden Hardware erschwert.

Es gibt daher eine Reihe von Verfahren zur Reduktion der Rechenzeit und des Speicherbedarfs bei der Disparitätsbestimmung in Stereobildern. In DE 10 2008 015 535 A1 wird ein Verfahren zur Rechenzeitreduzierung von globalen Stereoalgorithmen bei der Bildverarbeitung von Stereobildem vorgestellt, bei welchem in einem ersten Schritt Bilddaten eines Originalbildes aus zwei Stereobildern ermittelt werden. Anhand der Bilddaten wird eine Tiefenkarte des Originalbildes mit einer reduzierten Auflösung bestimmt. In einem zweiten Schritt wird eine Tiefenkarte eines wählbaren Ausschnittes des Originalbildes mit einer maximalen Auflösung ermittelt.

In DE 10 2008 017 834 A1 wird ein Verfahren zur Bestimmung von Korrespondenzen von Bildpunkten in mindestens zwei stereoskopisch aufgenommenen Bildern vorgestellt, bei dem für jedes Pixel eines der Bilder eine Berechnung von Kosten einer Unähnlichkeit anhand von Intensitäten des Pixels und eines als potentiell korrespondierend betrachteten Pixels des anderen Bildes durchgeführt wird, wobei entlang einer Anzahl von eindimensionalen Pfaden, die im Pixel münden, eine Akkumulierung der Kosten erfolgt, wobei aus den als potentiell korrespondierend betrachteten Pixeln des anderen Bildes dasjenige zur Erstellung einer Disparitätskarte ausgewählt wird, bei dem eine globale Energie minimal ist, die zumindest die Kosten der Unähnlichkeit umfasst, wobei das zur Bestimmung der Korrespondenzen in Bildausschnitte der Größe (n+1) x (m+1) unterteilt wird, wobei die in jedem der eindimensionalen Pfade akkumulierten Kosten für jede n-te Zeile und m-te Spalte gespeichert werden, wobei jeweils einer der Bildausschnitte geladen wird, wobei die für einen Rand des Bildausschnitts gespeicherten akkumulierten Kosten geladen werden, wobei die in jedem der eindimensionalen Pfade akkumulierten Kosten für ein Inneres des Bildausschnitts neu berechnet werden. Die beschriebene Lösung verringert den Speicherbedarf auf 8 x D x (H\n + W x H\m) + (n + 1) x (m + 1) x D bei acht zu berechnenden Richtungen. Auch wenn dies deutlich günstiger ist als der Speicherbedarf W x H x D des SGM-Verfahrens, weist das Verfahren weiterhin Nachteile im Bezug auf Speicherbedarf und Laufzeit für bestimmte Anwendungen auf. Ebenfalls nachteilig für das Verfahren ist die komplexe Implementierung, die eine Implementierung beispielsweise auf einem FGPA und/oder einer GPU erschwert.

Der Erfindung liegt daher das technische Problem zugrunde, ein Verfahren und eine Vorrichtung zur speichereffizienten Reduktion des Speicherbedarfs bei der Bestimmung von Disparitätswerten von mindestens zwei stereoskopisch aufgenommenen Bildern zu schaffen, welche mit keinem oder nur geringem Informationsverlust arbeiten.

Die Lösung des Problems ergibt sich durch die Gegenstände mit den Merkmalen der Ansprüche 1 und 9. Weitere vorteilhafte Ausgestaltungen der Erfindung ergeben sich aus den Unteransprüchen.

Hierbei erfolgt die Reduktion des Speicherbedarfs bei der Bestimmung von Disparitätswerten für mindestens zwei stereoskopisch aufgenommene Bilder mit bekannter Epipolargeometrie über ein Verfahren, bei dem für jedes Pixel eines ersten Bilds eine Disparität bestimmt wird, indem für eine Anzahl von Pfaden, die im Pixel münden, in mindestens zwei Durchläufen pfadabhängige Unähnlichkeitskosten anhand einer disparitätsabhängigen Kostenfunktion berechnet und verglichen werden, wobei die disparitätsabhängige Kostenfunktion mindestens ein pixelbasiertes Unähnlichkeitmaß zwischen dem Pixel und dem, gemäß der jeweiligen Disparität, korrespondierenden Pixel eines zweiten Bilds auswertet, wobei in einem ersten Durchlauf für eine Anzahl von Erstpfaden und in einem zweiten Durchlauf für eine Anzahl von Restpfaden die pfadabhängigen Unähnlichkeitskosten für eine erste vorbestimmte Menge von Disparitäten berechnet werden und für eine zweite vorbestimmte Menge von Disparitäten die entsprechenden pfadabhängigen Unähnlichkeitskosten der Erstpfade und der Restpfade akkumuliert werden, wobei die resultierende Disparität als eine Disparität bestimmt wird, bei der eine Akkumulierung von pfadabhängigen Unähnlichkeitskosten ein Minimum aufweist,
wobei die zweite Menge von Disparitäten kleiner ist als die erste vorbestimmte Menge von Disparitäten, wobei die zweite Menge (N) von Disparitäten mindestens eine Disparität, an der die pfadabhängigen Unähnlichkeitskosten mindestens eines Erstpfades ein Minimum der pfadabhängigen Unähnlichkeitskosten aufweisen, und/oder eine Disparität, an der die pfadabhängigen Unähnlichkeitskosten mindestens eines Restpfades ein Minimum der pfadabhängigen Unähnlichkeitskosten aufweisen, enthält oder die zweite Menge (N) von Disparitäten mindestens eine Disparität, die in vorbestimmter Weise von einer Disparität, an der die pfadabhängigen Unähnlichkeitskosten mindestens eines Erstpfades ein Minimum der pfadabhängigen Unähnlichkeitskosten aufweisen, entfernt ist und eine Disparität, die in vorbestimmter Weise von einer Disparität, an der die pfadabhängigen Unähnlichkeitskosten mindestens eines Restpfades ein Minimum der pfadabhängigen Unähnlichkeitskosten aufweisen, entfernt ist, enthält, wobei für die zweite vorbestimmte Menge von Disparitäten die Akkumulierung von entsprechenden pfadabhängigen Unähnlichkeitskosten dem ersten Durchlauf folgend erfolgt.

Hierdurch wird es in vorteilhafter Weise ermöglicht, nicht mehr alle pfadabhängigen Unähnlichkeitskosten für die Erstpfade und die Restpfade zu speichern, da die pfadabhängigen Unähnlichkeitskosten nicht mehr für die erste vorbestimmte Menge von Disparitäten, die üblicherweise den gesamten Disparitätsbereich umfasst, akkumuliert werden müssen. Die zweite vorbestimmte Menge von Disparitäten enthält dabei beispielsweise Disparitäten, an denen die pfadabhängigen Unähnlichkeitskosten eines jeden Erstpfades und/oder eines jeden Restpfades ein Minimum der pfadabhängigen Unähnlichkeitskosten aufweisen.

Weiter vorzugsweise enthält die zweite vorbestimmte Menge von Disparitäten zusätzlich mindestens jeweils eine, diesen Disparitäten benachbarte, Disparität.

Alternativ zum Minimum der pfadabhängigen Unähnlichkeitskosten sind auch andere Kriterien für die Auswahl der Elemente der zweiten vorbestimmten Menge von Disparitäten vorstellbar. Diese beschreiben beispielsweise, die dritte und/oder vierte Disparität von der Disparität, bei der die pfadabhängigen Unähnlichkeitskosten minimal sind, entfernt zu verwenden, um die pfadabhängigen Unähnlichkeitskosten zu akkumulieren.

Alternativ oder kumulativ enthält also die zweite Menge von Disparitäten mindestens eine Disparität, die in vorbestimmter Weise von einer Disparität, an der die pfadabhängigen Unähnlichkeitskosten mindestens eines Erstpfades ein Minimum der pfadabhängigen Unähnlichkeitskosten aufweisen, entfernt ist. Hierbei kann die mindestens eine Disparität bestimmt werden, in dem beispielsweise zu der Disparität, an der die pfadabhängigen Unähnlichkeitskosten mindestens eines Erstpfades ein Minimum der pfadabhängigen Unähnlichkeitskosten aufweisen, ein vorbestimmter Betrag addiert oder subtrahiert wird. Wird beispielsweise zur Bestimmung von pfadabhängigen Unähnlichkeitskosten eine vorbestimmte Menge von Disparitäten in einer vorbestimmten Reihenfolge ausgewertet, so kann die mindestens eine Disparität beispielsweise als die Disparität bestimmt werden, die in der vorbestimmten Reihenfolge um eine vorbestimmte Anzahl von Disparitäten, beispielsweise zwei, drei oder vier, vor oder hinter der Disparität, an der die pfadabhängigen Unähnlichkeitskosten mindestens eines Erstpfades ein Minimum der pfadabhängigen Unähnlichkeitskosten aufweisen, liegt. Weiter enthält die zweite Menge von Disparitäten mindestens eine Disparität, die in vorbestimmter Weise von einer Disparität, an der die pfadabhängigen Unähnlichkeitskosten mindestens eines Restpfades ein Minimum der pfadabhängigen Unähnlichkeitskosten aufweisen, entfernt ist. Hierbei kann die mindestens eine Disparität bestimmt werden, in dem beispielsweise zu der Disparität, an der die pfadabhängigen Unähnlichkeitskosten mindestens eines Restpfades ein Minimum der pfadabhängigen Unähnlichkeitskosten aufweisen, ein vorbestimmter Betrag addiert oder subtrahiert wird. Wird beispielsweise zur Bestimmung von pfadabhängigen Unähnlichkeitskosten nur eine vorbestimmte Menge von Disparitäten in einer vorbestimmten Reihenfolge ausgewertet, so kann die mindestens eine Disparität beispielsweise als die Disparität bestimmt werden, die in der vorbestimmten Reihenfolge um eine vorbestimmte Anzahl von Disparitäten, beispielsweise zwei, drei oder vier, vor oder hinter der Disparität, an der die pfadabhängigen Unähnlichkeitskosten mindestens eines Restpfades ein Minimum der pfadabhängigen Unähnlichkeitskosten aufweisen, liegt.

Damit ist die zweite vorbestimmte Menge von Disparitäten kleiner als die erste vorbestimmte Menge und konstant, der Speicheraufwand wird also unabhängig vom Disparitätsbereich.

Dem ersten Durchlauf folgend schließt hierbei ein, dass eine Akkumulierung von pfadabhängigen Unähnlichkeitskosten direkt nach dem ersten Durchlauf erfolgt. Weiter schließt dem ersten Durchlauf folgend ein, dass eine Akkumulierung von pfadabhängigen Unähnlichkeitskosten erst in einem dritten und/oder einem vierten Durchlauf und/oder weiteren Durchläufen erfolgen kann. Selbstverständlich kann eine Akkumulierung von pfadabhängigen Unähnlichkeitskosten direkt nach dem dritten und/oder vierten und/oder weiteren Durchläufen erfolgen. Auch schließt dem ersten Durchlauf folgend ein, dass eine Akkumulierung von pfadabhängigen Unähnlichkeitskosten in oder direkt nach einem zweiten Durchlauf erfolgt.

Die Anzahl der Pfade ist vorzugsweise 8, wobei die Anzahl der Erstpfade und die Anzahl der Restpfade vorzugsweise jeweils 4 ist. Es sind jedoch auch Ausführungsformen denkbar, in denen eine nicht symmetrische Verteilung, beispielsweise 5 Erstpfade und 3 Restpfade, gewählt wird.

Desweiteren ist das Verfahren nicht auf die Verarbeitung der von der Stereokamera aufgenommenen Originalbilder beschränkt. Insbesondere können auch Disparitätswerte für Bilder bestimmt werden, die aus den Originalbildern abgeleitet worden sind. Dies umfasst zum Beispiel aus den Originalbildern abgeleitete Kantenbilder.

Desweiteren kann die Epipolargeometrie, die eine notwendige Voraussetzung für das Verfahren ist, auch in einem vor dem Verfahren stattfindenden Vorverarbeitungsschritt bestimmt werden.

In einer bevorzugten Ausführungsform wird nach dem ersten Durchlauf für jeden der

Erstpfade die Erstpfaddisparität, bei der die jeweiligen pfadabhängigen Unähnlichkeitskosten minimal sind, bestimmt, gespeichert und in die zweite Menge von Disparitäten aufgenommen und nach dem zweiten Durchlauf für jeden der Restpfade eine Restpfaddisparität, bei der die jeweiligen pfadabhängigen Unähnlichkeitskosten minimal sind, bestimmt, gespeichert und in die zweite Menge von Disparitäten aufgenommen und in einem dritten Durchlauf werden über jeden der Erstpfade an den Erstpfaddisparitäten und den Restpfaddisparitäten akkumulierte Unähnlichkeitskosten bestimmt und ein einem vierten Durchlauf werden über jeden der Restpfade an den Erstpfaddisparitäten und den Restpfaddisparitäten akkumulierte Unähnlichkeitskosten bestimmt, wobei aus den so über Erstpfade und Restpfade an den Erstpfaddisparitäten und den Restpfaddisparitäten komplett akkumulierten Unähnlichkeitskosten ein Gesamtminimum und die zugehörige Disparität als resultierende Disparität bestimmt wird. Dadurch ergibt sich vorteilhafterweise, dass nach dem ersten Durchlauf nur die Disparitäten, bei denen die jeweiligen pfadabhängigen Unähnlichkeitskosten der Erstpfade minimal sind, und nach dem zweiten Durchlauf nur die Disparitäten, bei denen die jeweiligen pfadabhängigen Unähnlichkeitskosten der Restpfade minimal sind, gespeichert werden müssen. Hierdurch wird der Speicheraufwand unabhängig vom Disparitätsbereich. Dabei ist es möglich, den ersten und zweiten Durchlauf und/oder den dritten und vierten Durchlauf entweder parallel oder sequenziell ablaufen zu lassen. Bei parallelem Ablauf des ersten und zweiten Durchlaufs und/oder des dritten und vierten Durchlaufs ergibt sich vorteilhafterweise eine Laufzeitbeschleunigung. Vorzugsweise werden bei parallelen Durchläufen beide stereoskopisch aufgenommene Bilder mit bekannter Epipolargeometrie um 180 Grad gedreht. Dabei erfolgt die Bestimmung von pfadabhängigen Unähnlichkeitskosten, beispielsweise im zweiten Durchlauf, nach dem gleichen Vorgehen wie im ersten Durchlauf, nur dass im zweiten Durchlauf die pfadabhängigen Unähnlichkeitskosten auf einer um 180 Grad gedrehten Version der stereoskopisch aufgenommenen Bilder mit bekannter Epipolargeometrie bestimmt werden.

In einer bevorzugten Ausführungsform enthält die zweite Menge von Disparitäten eine Erstpfaddisparität für jeden Erstpfad und eine Restpfaddisparität für jeden Restpfad, wobei nach dem ersten Durchlauf für jeden der Erstpfade die Erstpfaddisparität, bei der die jeweiligen pfadabhängigen Unähnlichkeitskosten minimal sind, bestimmt, gespeichert und in die zweite Menge von Disparitäten aufgenommen wird und die über jeden der Erstpfade an der Erstpfaddisparität akkumulierten Unähnlichkeitskosten als Erstpfadteilkosten gespeichert werden und nach dem zweiten Durchlauf für jeden der Restpfade eine Restpfaddisparität, bei der die jeweiligen pfadabhängigen Unähnlichkeitskosten minimal sind, bestimmt, gespeichert und in die zweite Menge von Disparitäten aufgenommen wird und die über jeden der Restpfade an der Restpfaddisparität akkumulierten Unähnlichkeitskosten als Restpfadteilkosten gespeichert werden, wobei vor dem Speichern die in jedem der Restpfade an den Erstpfaddisparitäten entstehenden Unähnlichkeitskosten zu den gespeicherten Erstpfadteilkosten hinzugefügt werden und ein Erstpfadminimum der so über Erstpfade und Restpfade an den Erstpfaddisparitäten komplett akkumulierten Unähnlichkeitskosten bestimmt und mit der zugehörigen Erstpfaddisparität gespeichert wird, und in einem dritten Durchlauf die in jedem der Erstpfade an den Restpfaddisparitäten entstehenden Unähnlichkeitskosten zu den gespeicherten Restpfadteilkosten hinzugefügt werden und aus den so über Erstpfade und Restpfade an der Restpfaddisparität komplett akkumulierten Unähnlichkeitskosten und dem Erstpfadminimum ein Gesamtminimum und die zugehörige Disparität als resultierende Disparität bestimmt wird.

Hierdurch ergibt sich in vorteilhafter Weise, dass nach dem ersten Durchlauf nur die über jeden der Erstpfade an der Erstpfaddisparität akkumulierten Unähnlichkeitskosten und die zugehörigen Erstpfaddisparitäten und nach dem zweiten Durchlauf nur die über jeden der Restpfade an der Restpfaddisparität akkumulierten Unähnlichkeitskosten und die zugehörigen Restpfaddisparitäten gespeichert werden müssen. Damit wird der notwendige Speicherbedarf unabhängig vom Disparitätsbereich. Weiterhin ergibt sich in vorteilhafter Weise, dass durch die Betrachtung von Erst- und Restpfaden kein Informationsverlust bei der Berechnung von optimalen Disparitäten erfolgt. Durch die Bestimmung und Speicherung eines Erstpfadminimums und der zugehörigen Erstpfaddisparität nach dem zweiten Durchlauf, wird in vorteilhafter Weise ermöglicht, dass die über jeden der Restpfade an den Restpfaddisparitäten akkumulierten Unähnlichkeitskosten und die zugehörigen Restpfaddisparitäten denselben Speicherplatz wie die im ersten Durchlauf gespeicherten Unähnlichkeitskosten und Disparitäten belegen können.

In einer weiteren bevorzugten Ausführungsform enthält die zweite Menge von Disparitäten zusätzlich mindestens eine der Erstpfaddisparität benachbarte Erstpfadnachbardisparität und mindestens eine der Restpfaddisparität benachbarte Restpfadnachbardisparität, wobei nach dem ersten Durchlauf für jeden Erstpfad mindestens eine der Erstpfaddisparität benachbarte Erstpfadnachbardisparität bestimmt und in die zweite Menge von Disparitäten aufgenommen wird und zusätzlich die über jeden der Erstpfade an mindestens einer der Erstpfaddisparität benachbarten Erstpfadnachbardisparität akkumulierten Unähnlichkeitskosten als Erstpfadnachbarteilkosten gespeichert werden und nach dem zweiten Durchlauf für jeden Restpfad mindestens eine der Restpfaddisparität benachbarte Restpfadnachbardisparität bestimmt und in die zweite Menge von Disparitäten aufgenommen wird und zusätzlich die über jeden der Restpfade an mindestens einer der Restpfaddisparität benachbarten Restpfadnachbardisparität akkumulierten Unähnlichkeitskosten als Restpfadnachbarteilkosten gespeichert werden, wobei vor dem Speichern die in jedem der Restpfade an den Erstpfadnachbardisparitäten entstehenden Unähnlichkeitskosten zu den gespeicherten Erstpfadnachbarteilkosten hinzugefügt werden und das Erstpfadminimum aus den über Erstpfade und Restpfade an den Erstpfaddisparitäten und den Erstpfadnachbardisparitäten komplett akkumulierten Unähnlichkeitskosten bestimmt und gespeichert wird, und in einem dritten Durchlauf für zusätzlich die in jedem der Erstpfade an den Restpfadnachbardisparitäten entstehenden Unähnlichkeitskosten zu den gespeicherten Restpfadnachbarteilkosten hinzugefügt werden und aus den so über Erstpfade und Restpfade an den Restpfaddisparitäten und den Restpfadnachbardisparitäten komplett akkumulierten Unähnlichkeitskosten und dem Erstpfadminimum ein Gesamtminimum und die zugehörige Disparität als resultierende Disparität bestimmt wird. Hierdurch wird in vorteilhafter Weise ermöglicht, dass der optimale Disparitätswert mit Subpixelgenauigkeit bestimmt werden kann.

In einer alternativen Ausführungsform enthält die zweite Menge von Disparitäten mindestens eine erste resultierende Disparität und mindestens eine, der ersten resultierenden Disparität benachbarte, Nachbardisparität, wobei nach Bestimmung des Gesamtminimums und der resultierenden Disparität nach dem dritten Durchlauf zusätzlich das Gesamtminimum als erstes Gesamtminimum, die resultierende Disparität als die erste resultierende Disparität und die über jeden der Erstpfade an mindestens der, der ersten resultierenden Disparität benachbarten, Nachbardisparität akkumulierten Unähnlichkeitskosten als Nachbarteilkosten gespeichert werden und nach einem vierten Durchlauf die über jeden der Restpfade an der Nachbardisparität akkumulierten Unähnlichkeitskosten zu den Nachbarteilkosten hinzugefügt werden und aus den so über Erstpfade und Restpfade an der Nachbardisparität komplett akkumulierten Unähnlichkeitskosten und dem ersten Gesamtminimum ein zweites Gesamtminimum und die zugehörige Disparität als zweite, resultierende Disparität bestimmt wird. Hierdurch ergibt sich in vorteilhafter Weise, dass die resultierende Disparität mit Subpixelgenauigkeit bestimmt werden kann und nach dem ersten und zweiten Durchlauf weniger Speicherplatz benötigt wird.

In einer weiteren bevorzugten Ausführungsform enthält die zweite Menge von Disparitäten eine resultierende Erstpfaddisparität und eine resultierende Restpfaddisparität, wobei nach dem ersten Durchlauf für jeden der Erstpfade die Erstpfaddisparität, bei der die jeweiligen pfadabhängigen Unähnlichkeitskosten minimal sind, und die über jeden der Erstpfade an der Erstpfaddisparität akkumulierten Unähnlichkeitskosten als Erstpfadteilkosten bestimmt werden, wobei das Minimum der Erstpfadteilkosten bestimmt und gespeichert wird und die zugehörige Disparität als resultierende Erstpfaddisparität gespeichert und in die zweite Menge von Disparitäten aufgenommen wird und in einem zweiten Durchlauf für jeden der Restpfade die Restpfaddisparität, bei der die jeweiligen pfadabhängigen Unähnlichkeitskosten minimal sind, und die über jeden der Restpfade an der Restpfaddisparität akkumulierten Unähnlichkeitskosten als Restpfadteilkosten bestimmt werden, wobei das Minimum der Restpfadteilkosten bestimmt und gespeichert wird und die zugehörige Disparität als resultierende Restpfaddisparität gespeichert und in die zweite Menge von Disparitäten aufgenommen wird, wobei vor dem Speichern die in jedem der Restpfade an der resultierenden Erstpfaddisparität entstehenden Unähnlichkeitskosten zu dem Minimum der Erstpfadteilkosten hinzugefügt werden und die so über Erstpfade und Restpfade an der resultierenden Erstpfaddisparität komplett akkumulierten Unähnlichkeitskosten als Erstpfadminimum gespeichert werden und in einem dritten Durchlauf die in jedem der Erstpfade an der resultierenden Restpfaddisparität entstehenden Unähnlichkeitskosten zu dem Minimum der Restpfadteilkosten hinzugefügt werden und aus den so über Erstpfade und Restpfade an der resultierenden Restpfaddisparität komplett akkumulierten Unähnlichkeitskosten und dem Erstpfadminimum ein Gesamtminimum und die zugehörige Disparität als resultierende Disparität bestimmt wird. Hierdurch wird vorteilhaft sichergestellt, dass nicht für jeden der Erstpfade und Restpfade Unähnlichkeitskosten und Disparitäten gespeichert werden müssen.

In einer weiteren bevorzugten Ausführungsform enthält die zweite Menge von Disparitäten zusätzlich mindestens eine, der resultierenden Erstpfaddisparität benachbarte, Disparität und mindestens eine, der resultierenden Restpfaddisparität benachbarte, Disparität, wobei nach dem ersten Durchlauf zusätzlich mindestens eine, der resultierenden Erstpfaddisparität benachbarten, Disparität bestimmt und in die zweite Menge von Disparitäten aufgenommen wird und über jeden der Erstpfade an der, der resultierenden Erstpfaddisparität benachbarten, Disparität akkumulierten Unähnlichkeitskosten als Erstpfadnachbarteilkosten gespeichert werden und nach dem zweiten Durchlauf zusätzlich mindestens eine, der resultierenden Restpfaddisparität benachbarten, Disparität bestimmt und in die zweite Menge von Disparitäten aufgenommen wird und die über jeden der Restpfade an der, der resultierenden Restpfaddisparität benachbarten, Disparität akkumulierten Unähnlichkeitskosten als Restpfadnachbarteilkosten gespeichert werden, wobei vor dem Speichern zusätzlich die in jedem der Restpfade an der, der resultierenden Erstpfaddisparität benachbarten, Disparität entstehenden Unähnlichkeitskosten zu den Erstpfadnachbarteilkosten hinzugefügt und das Erstpfadminimum aus den so über Erstpfade und Restpfade an der resultierenden Erstpfaddisparität und an der, der resultierenden Erstpfaddisparität benachbarten, Disparität komplett akkumulierten Unähnlichkeitskosten bestimmt und mit der zugehörigen Disparität gespeichert wird und in einem dritten Durchlauf zusätzlich die über jeden der Erstpfade an der, der resultierenden Restpfaddisparität benachbarten, Disparität entstehenden Unähnlichkeitskosten zu den Restpfadnachbarteilkosten hinzugefügt werden und aus den so über Erstpfade und Restpfade an der resultierenden Restpfaddisparität und der, der resultierenden Restpfaddisparität benachbarten, Disparität komplett akkumulierten Unähnlichkeitskosten und dem dem Erstpfadminimum ein Gesamtminimum und die zugehörige Disparität als resultierende Disparität bestimmt wird. Hierdurch wird in vorteilhafter Weise ermöglicht, dass die resultierende Disparität mit Subpixelgenauigkeit bestimmt werden kann, wobei nicht für alle Pfade Unähnlichkeitskosten und Disparitäten gespeichert werden müssen.

In einer weiteren bevorzugten Ausführungsform findet vor mindestens einer Speicherschreibeoperation eine Kompression der zu speichernden Daten und nach der Speicherleseoperation, die die in der Speicherschreibeoperation gespeicherten Daten liest, eine Dekompression der gespeicherten Daten statt. Hiermit wird vorteilhaft ermöglicht, dass die Größe des zu speicherenden Volumens reduziert wird und die Anforderungen an die Speicherbandbreite gesenkt werden.

Zur Durchführung des Verfahrens zur Reduktion des temporären Arbeitsspeichers bei der Bestimmung von Disparitätswerten für mindestens zwei stereoskopisch aufgenommene Bilder mit bekannter Epipolargeometrie, umfasst eine Vorrichtung mindestens eine Speichereinheit und eine mit der Speichereinheit datentechnisch verbundene Recheneinheit, in der für jedes Pixel eines ersten Bilds eine Disparität bestimmt wird, indem für eine Anzahl von Pfaden, die im Pixel münden, in mindestens zwei Durchläufen pfadabhängige Unähnlichkeitskosten anhand einer disparitätsabhängigen Kostenfunktion berechnet und verglichen werden, wobei die disparitätsabhängige Kostenfunktion mindestens ein pixelbasiertes Unähnlichkeitmaß zwischen dem Pixel und dem, gemäß der jeweiligen Disparität, korrespondierenden Pixel eines zweiten Bildes auswertet, wobei in einem ersten Durchlauf für eine Anzahl von Erstpfaden und in einem zweiten Durchlauf für eine Anzahl von Restpfaden die pfadabhängigen Unähnlichkeitskosten für eine erste vorbestimmte Menge von Disparitäten berechnet werden und für eine zweite vorbestimmte Menge von Disparitäten die entsprechenden pfadabhängigen Unähnlichkeitskosten der Erstpfade und der Restpfade akkumuliert werden, wobei die resultierende Disparität als eine Disparität bestimmt wird, bei der eine Akkumulierung von pfadabhängigen Unähnlichkeitskosten ein Minimum aufweist, wobei die zweite Menge von Disparitäten kleiner ist als die erste vorbestimmte Menge von Disparitäten, wobei die zweite Menge (N) von Disparitäten mindestens eine Disparität, an der die pfadabhängigen Unähnlichkeitskosten mindestens eines Erstpfades ein Minimum der pfadabhängigen Unähnlichkeitskosten aufweisen, und/oder eine Disparität, an der die pfadabhängigen Unähnlichkeitskosten mindestens eines Restpfades ein Minimum der pfadabhängigen Unähnlichkeitskosten aufweisen, enthält oder die zweite Menge (N) von Disparitäten mindestens eine Disparität, die in vorbestimmter Weise von einer Disparität, an der die pfadabhängigen Unähnlichkeitskosten mindestens eines Erstpfades ein Minimum der pfadabhängigen Unähnlichkeitskosten aufweisen, entfernt ist und eine Disparität, die in vorbestimmter Weise von einer Disparität, an der die pfadabhängigen Unähnlichkeitskosten mindestens eines Restpfades ein Minimum der pfadabhängigen Unähnlichkeitskosten aufweisen, entfernt ist, enthält, und wobei die Akkumulierung von entsprechenden pfadabhängigen Unähnlichkeitskosten für eine zweite vorbestimmte Menge von Disparitäten dem ersten Durchlauf folgend erfolgt.

Hinsichtlich weiterer vorteilhafter Ausgestaltungen der Vorrichtung wird auf die vorangegangenen Ausführungen zu den Verfahrensansprüchen Bezug genommen.

Die Erfindung wird nachfolgend anhand eines bevorzugten Ausführungsbeispiels näher erläutert. Die Figuren zeigen:
- Fig. 1: eine vereinfachte Darstellung des Ursprungsbildes mit acht Pfaden,
- Fig. 2: eine vereinfachte Darstellung des ersten Durchlaufs mit den vier Erstpfaden,
- Fig. 3: eine vereinfachte Darstellung des zweiten Durchlaufs mit den vier Restpfaden,
- Fig. 4: eine vereinfachte Darstellung der Bestimmung von Erstpfadteilkosten im ersten Durchlauf und
- Fig. 5: ein schematisches Blockschaltbild einer Vorrichtung zur Reduktion des Speicherbedarfs.

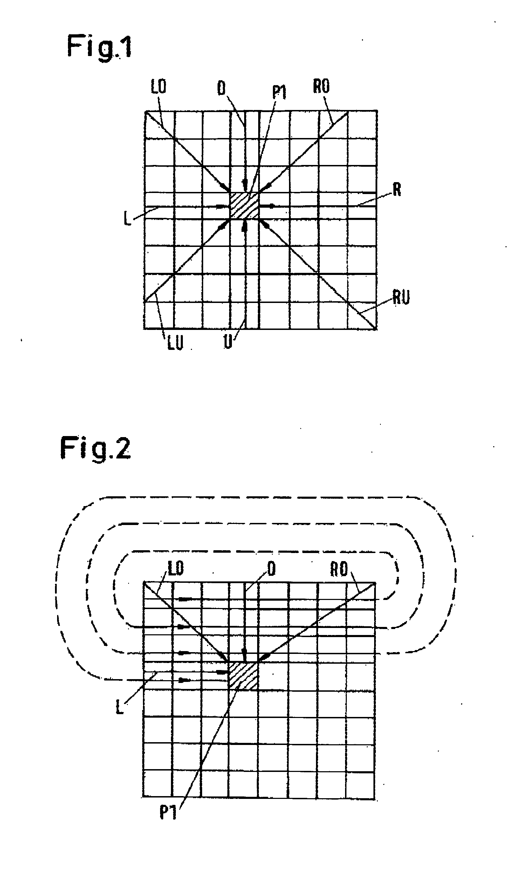

Für die folgenden, konkreten Ausführungsformen werden, wie in Fig. 1 dargestellt, für jedes Pixel P1 eines Ursprungsbilds, welches beispielsweise dem ersten Bild B1' der beiden stereoskopisch aufgenommenen Bilder B1', B2' mit bekannter Epipolargeometrie entspricht, pfadabhängige Unähnlichkeitskosten für Pfade aus acht Richtungen (K=8), die im Pixel P1 münden, bestimmt und ausgewertet. Die Richtungen der Pfade umfassen dabei die Richtungen von links L, von links oben LO, von oben O, von rechts oben RO, von rechts R, von rechts unten RU, von unten U und von links unten LU.

Im ersten Durchlauf werden pfadabhängige Unähnlichkeitskosten für die vier Richtungen von links L, von links oben LO, von oben O und von rechts oben RO bestimmt (M=4). Diese Richtungen werden im Folgenden als Erstpfade bezeichnet. Dementsprechend werden die vier übrigen Richtungen R, RU, U, LU als Restpfade bezeichnet. Wie in Fig. 2 dargestellt wird im ersten Durchlauf das Ursprungsbild, beispielsweise B1', zeilenweise von oben nach unten durchlaufen, wobei jede Zeile von links nach rechts durchlaufen wird. Für eine bestimmte Disparität d eines Disparitätsbereichs D bestimmen sich die pfadabhängigen Unähnlichkeitskosten eines Pfades beispielsweise als die Summe von einem pixelbasierten Unähnlichkeitsmaß und aus bestimmten pfadabhängigen Unähnlichkeitskosten des Vorgängerpixels auf dem Pfad. Das pixelbasierte Unähnlichkeitsmaß kann dabei beispielsweise auf Basis von Mutual Information (MI) berechnet werden. Es sind aber auch pixelbasierte Unähnlichkeitsmaße vorstellbar, die auf der Intensität der betrachteten Pixel basieren, beispielsweise der sogenannte sampling insensitive measure, der in "S. Birchfeld and C. Tomasi, Depth discontinuities by pixel-to-pixel stereo, in Proceedings oft he Sixth IEEE International Conference on Computer Vision, Mumbai, India, January 1998, pp. 1073-1080" vorgestellt wird.

Alternativ ist es auch denkbar, andere Unähnlichkeitsmaße wie zum Beispiel das in "Zabih, R and Woodfill, J. Non-parametric local transforms for computing visual correspondance. Proceedings of the European Conference of Computer Vision, May 1994, Stockholm, Sweden, pp. 151-158" vorgestellte Maß zu verwenden.

Die bestimmten pfadabhängigen Unähnlichkeitskosten des Vorgängerpixels können beispielsweise als das Minimum aus der Gruppe von pfadabhängigen Unähnlichkeitskosten des Vorgängerpixels an der Disparität d, pfadabhängigen Unähnlichkeitskosten des Vorgängerpixels an der Disparität d-1, pfadabhängige Unähnlichkeitskosten des Vorgängerpixels an der Disparität d+1 und den minimalen pfadabhängigen Unähnlichkeitskosten des Vorgängerpixels über alle Disparitäten berechnet werden. Hierbei werden die pfadabhängigen Unähnlichkeitskosten des Vorgängerpixels an den Disparitäten d-1 und d+1 mit einem ersten konstanten Strafterm und die minimalen pfadabhängigen Unähnlichkeitskosten des Vorgängerpixels mit einem zweiten Strafterm, der entweder konstant oder abhängig vom Intensitätsunterschied des betrachteten Pixels und des Vorgängerpixels ist, beaufschlagt. Die pfadabhängigen Unähnlichkeitskosten werden für jeden Pixel für jeden der vier Erstpfade für jede Disparität zur Laufzeit des ersten Durchlaufs bestimmt. Für die Berechnung der pfadabhängigen Unähnlichkeitskosten sind für den Durchlauf 1 für die Pfade von links oben LO, oben O und rechts oben RO, für jeden Pixel der Vorgängerzeile die pfadabhängigen Unähnlichkeitskosten über den gesamten Disparitätsbereich D zu speichern. Für den Pfad von links L müssen jeweils nur die pfadabhängigen Unähnlichkeitskosten des Vorgängerpixels über den gesamten Disparitätsbereich D gespeichert werden. Dadurch ergibt sich für die Berechnung der pfadabhängigen Unähnlichkeitskosten eines Pixels P ein Arbeitsspeicherbedarf von 3 x W x D + D Werten. Theoretisch sind für die Berechnung der pfadabhängigen Unähnlichkeitskosten für den Pixel P1 für alle Disparitäten des vorbestimmten Disparitätsbereichs D nur die Information der Nachbarpixel links L, links oben LO, oben O und rechts oben RO notwendig. Das Abspeichern der pfadabhängigen Unähnlichkeitskosten für alle Disparitäten d eines vorbestimmten Disparitätsbereichs D für jeden Pixel der Vorgängerzeile stellt dabei eine praktische Form der Ausführung dar. Es ist zu beachten, dass die Vorgängerzeile nicht notwendigerweise der Vorgängerbildzeile entspricht sondern einen Speicherbereich bezeichnet, der eine Größe von W hat und pfadabhängige Unähnlichkeitskosten für alle Disparitäten d des vorbestimmten Disparitätsbereichs D für W Pixel entlang der Durchlaufrichtung enthält, wobei der letzte Pixel des Speicherbereichs der zweite Pixel in entgegensetzter Durchlaufrichtung vom betrachteten Pixel P1 ist.

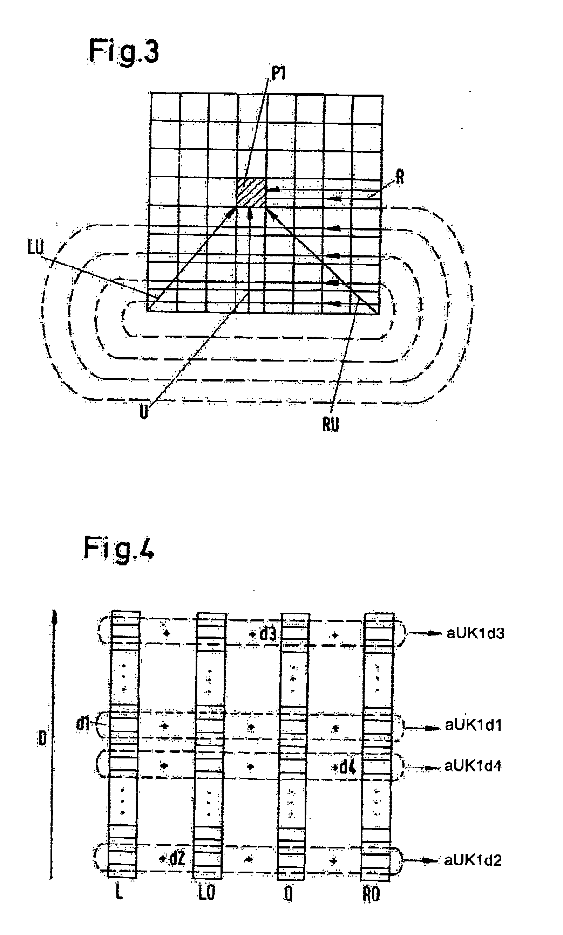

Die Berechnung pfadabhängiger Unähnlichkeitskosten der Restpfade im zweiten Durchlauf erfolgt analog. Hierbei wird das Ursprungsbild, beispielsweise B1', wie in Fig. 3 dargestellt, zeilenweise von unten nach oben durchlaufen, wobei die Zeilen von rechts nach links durchlaufen werden. Pfadabhängige Unähnlichkeitskosten werden hierbei für die Richtungen von rechts R, von rechts unten RU, von unten U und von links unten LU bestimmt. Zur Bestimmung einer resultierenden Disparität dmin aus den pfadabhängigen Unähnlichkeitskosten der im ersten Durchlauf durchlaufenden Erstpfade und den pfadabhängigen Unähnlichkeitskosten der im zweiten Durchlauf durchlaufenden Restpfade findet nach dem ersten Durchlauf ein Zwischenspeichervorgang statt.

Bei der Verteilung der Pfade ist auch die Betrachtung von 8 Pfaden, die im Pixel P1 münden, möglich, wobei im ersten Durchlauf beispielsweise 5 Pfade (M=5) betrachtet werden, beispielsweise aus den Richtungen von links L, von links oben LO, von oben O, von rechts oben RO und von rechts R.

In einem ersten konkreten Ausführungsbeispiel werden im ersten Durchlauf für jeden der Erstpfade L, LO, O, RO die pfadabhängigen Unähnlichkeitskosten über den gesamten Disparitätsbereich D für einen Pixel ermittelt. Zur Laufzeit des ersten Durchlaufs werden also für einen Erstpfad D pfadabhängige Unähnlichkeitskosten ermittelt. Insgesamt werden also im ersten Durchlauf 4 x D pfadabhängige Unähnlichkeitskosten ermittelt. Aus den ermittelten 4 x D pfadabhängigen Unähnlichkeitskosten wird für jeden der Erstpfade L, LO, O, RO die Erstpfaddisparität d1, d2, d3, d4 ermittelt, bei der die jeweiligen pfadabhängigen Unähnlichkeitskosten UK1dk1 minimal sind. Statt der im ersten Durchlauf ermittelten 4 x D pfadabhängigen Unähnlichkeitskosten werden nun nur Erstpfaddisparitäten d1, d2, d3, d4 gespeichert. Dafür werden 4 x 1 = 4 statt 4 x D Speicherstellen pro Pixel benötigt. Analog erfolgt eine Emittlung und Speicherung von Restpfaddisparitäten d5, d6, d7, d8. Insgesamt werden nach dem zweiten Durchlauf also 8 Disparitäten gespeichert.

Hiernach erfolgt im dritten Durchlauf eine Akkumulierung der Unähnlichkeitskosten, die in jedem der Erstpfade an der jeweiligen Disparität d1, d2, d3, d4, d5, d6, d7, d8 entstehen. Die zweite Menge N von Disparitäten umfasst also hierbei 8 Elemente, die Erstpfaddisparitäten d1, d2, d3, d4 und die Restpfaddisparitäten d5, d6, d7, d8.

Die Akkumulation kann beispielsweise als Addition ausgeführt sein. Für die Erstpfaddisparität d1, bei der die pfadabhängigen Unähnlichkeitskosten UK1d1 des Erstpfades L minimal sind, werden also die pfadabhängigen Unähnlichkeitskosten des Pfades L an der Disparität d1, die pfadabhängigen Unähnlichkeitskosten des Pfades LO an der Disparität d1, die pfadabhängigen Unähnlichkeitskosten des Pfades O an der Disparität d1 und die pfadabhängigen Unähnlichkeitskosten des Pfades RO an der Disparität d1 summiert. Nach der Akkumulierung im dritten Durchlauf werden, zusätzlich zu den Erstpfaddisparitäten d1, d2, d3, d4 und den Restpfaddisparitäten d5, d6, d7, d8 auch die akkumulierten Unähnlichkeitskosten, die in jedem der Erstpfade an der jeweiligen Disparität d1, d2, d3, d4, d5, d6, d7, d8 entstehen, gespeichert. Analog erfolgt im vierten Durchlauf eine Akkumulierung der Unähnlichkeitskosten, die in jedem der Restpfade an der jeweiligen Disparität d1, d2, d3, d4, d5, d6, d7, d8 entstehen. Aus den so für alle Erstpfaddisparitäten d1, d2, d3, d4 und Restpfaddisparitäten d5, d6, d7, d8 über alle Erstpfade und Restpfade komplett akkumulierten Unähnlichkeitskosten wird ein Gesamtminimum und die zugehörige Disparität als resultierende Disparität dmin bestimmt.

In dieser konkreten Ausführungsform sind 8 x 2 = 16 Speicherstellen pro Pixel zur Zwischenspeicherung notwendig. Insgesamt ergibt sich ein Speicherbedarf von 3 x W x D + D + W x H x 16 Speicherstellen.

Vorzugsweise laufen dabei der erste und der zweite Durchlauf und /oder der dritte und der vierte Durchlauf parallel. Dabei erfolgt die Bestimmung von pfadabhängigen Unähnlichkeitskosten, beispielsweise im zweiten Durchlauf, nach dem gleichen Vorgehen wie im ersten Durchlauf, nur dass im zweiten Durchlauf die pfadabhängigen Unähnlichkeitskosten auf einer um 180 Grad gedrehten Version der stereoskopisch aufgenommenen Bilder B1', B2' mit bekannter Epipolargeometrie bestimmt werden. Insbesondere werden also auch im zweiten Durchlauf pfadabhängige Unähnlichkeitskosten aus den Richtungen L, LO, O, RO über die um 180 Grad gedrehten stereoskopisch aufgenommenen Bilder B1', B2' mit bekannter Epipolargeometrie bestimmt. Analog kann das Vorgehen auch für den vierten Durchlauf erfolgen.

In einem zweiten konkreten Ausführungsbeispiel werden, wie in Fig. 4 dargestellt, im ersten Durchlauf für jeden der Erstpfade die pfadabhängigen Unähnlichkeitskosten über den gesamten Disparitätsbereich D ermittelt. Zur Laufzeit des ersten Durchlaufs werden also für einen Erstpfad D pfadabhängige Unähnlichkeitskosten ermittelt. Insgesamt werden also im ersten Durchlauf 4 x D pfadabhängige Unähnlichkeitskosten pro Pixel ermittelt. Aus den ermittelten 4 x D pfadabhängigen Unähnlichkeitskosten wird für jeden der Erstpfade die Erstpfaddisparität dk1 ermittelt, bei der die jeweiligen pfadabhängigen Unähnlichkeitskosten UK1dk1 minimal sind. In Fig. 4 ist für den Erstpfad L die Erstpfaddisparität d1 als die Erstpfaddisparität dargestellt, bei der die pfadabhängigen Unähnlichkeitskosten des Pfades L minimal sind. Analog erfolgt die Bestimmung der weiteren Erstpfaddisparitäten d2, d3, d4 der weiteren Erstpfade LO, O, RO. Hiernach erfolgt für jede der ermittelten Erstpfaddisparitäten d1, d2, d3, d4 eine Akkumulierung der Unähnlichkeitskosten, die in jedem der Erstpfade an der jeweiligen Disparität d1, d2, d3, d4 entstehen. Die Akkumulation kann, wie in Fig. 4 dargestellt, beispielsweise als Addition ausgeführt sein. Für die Erstpfaddisparität d1, bei der die pfadabhängigen Unähnlichkeitskosten UK1d1 des Erstpfades L minimal sind, werden also die pfadabhängigen Unähnlichkeitskosten des Pfades L an der Disparität d1, die pfadabhängigen Unähnlichkeitskosten des Pfades LO an der Disparität d1, die pfadabhängigen Unähnlichkeitskosten des Pfades O an der Disparität d1 und die pfadabhängigen Unähnlichkeitskosten des Pfades RO an der Disparität d1 summiert. Die so aufsummierten pfadabhängigen Unähnlichkeitskosten werden im Weiteren als Erstpfadteilkosten aUK1d1 bezeichnet. Analog werden Erstpfadteilkosten aUK1d2, aUK1d3, aUK1d4 ermittelt. Statt der im ersten Durchlauf ermittelten 4 x D pfadabhängigen Unähnlichkeitskosten werden nun die so ermittelten Erstpfadteilkosten aUK1d1, aUK1d2, aUK1d3, aUK1d4 zusammen mit den zugehörigen Erstpfaddisparitäten d1, d2, d3, d4 gespeichert. Dafür werden 4 x 2 = 8 statt 4 x D Speicherstellen pro Pixel benötigt.

Die Erstpfadteilkosten aUK1d1, aUK1d2, aUK1d3, aUK1d4 umfassen nach dem ersten Durchlauf nur Informationen (pfadabhängige Unähnlichkeitskosten) der Erstpfade. Zur vollständigen Bestimmung der über alle Pfade an den Erstpfaddisparitäten d1, d2, d3, d4 komplett akkumulierten Unähnlichkeitskoten kUKd1, kUKd2, kUKd3, kUKd4 müssen noch die über alle Restpfade an den Erstpfaddisparitäten d1,d2,d3,d3 aufsummierten pfadabhängigen Unähnlichkeitskosten aUK2d1, aUK2d2, aUK2d3, aUK2d4 bestimmt und und zu den Erstpfadteilkosten aUK1d1, aUK1d2, aUK1d3, aUK1d4 hinzugefügt werden. Im zweiten Durchlauf werden daher zwei Vorgänge durchgeführt. Erstens werden, analog zum ersten Durchlauf, Restpfaddisparitäten d5, d6, d7, d8 und Restpfadteilkosten aUK2d5, aUK2d6, aUK2d7, aUK2d8 ermittelt. Gleichzeitig werden zu den im ersten Durchlauf gespeicherten Erstpfadteilkosten aUK1d1, aUK1d2, aUK1d3, aUK1d4 die über alle Restpfade an den Erstpfaddisparitäten d1, d2, d3, d4 aufsummierten, pfadabhängigen Unähnlichkeitskosten aUK2d1, aUK2d2, aUK2d3, aUK2d4 hinzugefügt. Nach dem zweiten Durchlauf liegen somit die über alle acht Pfade an den Erstpfaddisparitäten d1, d2, d3, d4 komplett akkumulierten Unähnlichkeitskosten kUKd1, kUKd2, kUKd3, kUKd4 vor. Aus diesen komplett akkumulierten Unähnlichkeitskosten kUKd1, kUKd2, kUKd3, kUKd4 wird dann ein Erstpfadminimum bestimmt und mit der zugehörigen Erstpfaddisparität aus der Gruppe d1, d2, d3, d4 gespeichert. Das Erstpfadminimum ist beispielsweise das Minimum aus der Gruppe der über alle acht Pfade an den Erstpfaddisparitäten d1, d2, d3, d4 komplett akkumulierten Unähnlichkeitskosten kUKd1, kUKd2, kUKd3, kUKd4. Damit werden zwei weitere Speicherstellen notwendig. Über die im ersten Durchlauf beschriebenen Speicherstellen werden nun die im zweiten Durchlauf ermittelten Restpfaddisparitäten d5, d6, d7, d8 und die zugehörigen Restpfadteilkosten aUK2d5, aUK2d6, aUK2d7, aUK2d8 gespeichert. Die Restpfadteilkosten aUK2d5, aUK2d6, aUK2d7, aUK2d8 enthalten nach dem zweiten Durchlauf jedoch nur Informationen (pfadabhängige Unähnlichkeitskosten) der Restpfade. Um die in allen Pfaden an den Restpfaddisparitäten d5, d6, d7, d8 entstehenden pfadabhängigen Unähnlichkeitskosten komplett zu akkumulieren, wird ein dritter Durchlauf durchgeführt, der das Ursprungsbild, beispielsweise B1', analog zu Durchlauf 1 durchläuft. Hierbei werden über alle Erstpfade an den Restpfaddisparitäten d5,d6,d7,d8 aufsummierten, pfadabhängigen Unähnlichkeitskosten aUK1d5, aUK1d6, aUK1d7, aUK1d8 bestimmt und zu den gespeicherten Restpfadteilkosten aUK2d5, aUK2d6, aUK2d7, aUK2d8 hinzugefügt. Nach dem dritten Durchlauf sind die, an den Restpfaddisparitäten d5,d6,d7,d8 entstehenden pfadabhängigen Unähnlichkeitskosten über alle Pfade akkumuliert. Aus einem Vergleich dieser komplett akkumulierten Kosten kUKd5, kUKd6, kUKd7, kUKd8 mit dem gespeicherten Erstpfadminimum können somit ein Gesamtminimum und die zugehörige Disparität als resultierende Disparität dmin bestimmt werden. In diesem Ausführungsbeispiel umfasst die Menge N von zweiten vorbestimmten Disparitäten 8 Elemente, nämlich vier Erstpfaddisparitäten d1, d2, d3, d4 und vier Restpfaddisparitäten d5, d6, d7, d8. In dieser konkreten Ausführungsform sind 4 x 2 + 2 = 10 Speicherstellen pro Pixel zur Zwischenspeicherung notwendig. Insgesamt ergibt sich ein Speicherbedarf von 3 x W x D + D + W x H x 10 Speicherstellen.

In einer weiteren konkreten Ausführungsform werden nach dem ersten Durchlauf für jeden Erstpfad zusätzlich die über jeden der Erstpfade an zwei der entsprechenden Erstpfaddisparität, beispielsweise d1 beim Erstpfad von links L, benachbarten Erstpfadnachbardisparitäten, beispielsweise d1-1 (d11) und d1+1 (d12), akkumulierten Unähnlichkeitskosten als Erstpfadnachbarteilkosten aUK1d11 und aUK1d12 gespeichert. Hiermit sind nach dem ersten Durchlauf 4 x 4 Speicherplätze notwendig, da für jeden Erstpfad, beispielsweise L, die Erstpfaddisparität d1, die über alle Erstpfade an der Erstpfaddisparität d1 akkumulierten Unähnlichkeitskosten aUK1d1 und die über alle Erstpfade an den Erstpfadnachbardisparitäten d1-1, d1+1 akkumulierten Unähnlichkeitskosten aUK1d11, aUK1d12 gespeichert werden müssen. Die Ermittlung und Speicherung der weiteren Erstpfaddisparitäten d2, d3, d4, Erstpfadnachbardisparitäten d21, d22, d31, d32, d41, d42, Erstpfadteilkosten aUK1d2, aUK1d3, aUK1d4 und Erstpfadnachbarteilkosten aUK1d21, aUK1d22, aUK1d31, aUK1d32, aUK1d41 und aUK1d42 erfolgt analog. Analog zum ersten Durchlauf werden im zweiten Durchlauf Restpfadnachbardisparitäten d51, d52,d61,d62,d71,d72,d81,d82 und Restpfadnachbarteilkosten aUK2d51, aUK2d52, aUK2d61, aUK2d62, aUK2d71, aUK2d72, aUK2d81, aUK2d82 bestimmt und zusätzlich die über jeden der Restpfade an den Erstpfadnachbardisparitäten d11,d12, d21,d22, d31,d32, d41,d42 entstehenden Unähnlichkeitskosten zu den gespeicherten Erstpfadnachbarteilkosten aUK1d11, aUK1d12, aUK1d21, aUK1d22, aUK1d31, aUK1d32, aUK1d41 und aUK1d42 hinzugefügt. Aus den so über alle Pfade an den Erstpfaddisparitäten d1,d2,d3,d4 und Erstpfadnachbardisparitäten d11,d12, d21,d22, d31,d32, d41,d42 akkumulierten pfadabhängigen Unähnlichkeitskosten kUKd1, kUKd2, kUKd3, kUKd4, kUKd11, kUKd12, kUKd21, kUKd22, kUKd31, kUKd32, kUKd41, kUKd42 kann nun ein Erstpfadminimum und die zugehörigen Disparität mit Subpixelgenauigkeit bestimmt und gespeichert werden. Analog werden nun im dritten Durchlauf die Restpfadnachbarteilkosten komplettiert und aus den über alle Pfade an den Restpfaddisparitäten akkumulierten pfadabhängigen Unähnlichkeitskosten kUKd5, kUKd6, kUKd7, kUKd8, den über alle Pfade an den Restpfadnachbardisparitäten akkumulierten Unähnlichkeitskosten kUKd51, kUKd52, kUKd41, kUKd62, kUKd71, kUKd72, kUKd81. kUKd82 und dem Erstpfadminimum kann nun ein Gesamtminimum und eine resultierende Disparität dmin mit Subpixelgenauigkeit bestimmt werden.

In dieser konkreten Ausführungsform sind also 4 x 4 + 2 = 18 Speicherstellen pro Pixel zur Zwischenspeicherung notwendig. Insgesamt ergibt sich ein Speicherbedarf von 3 x W x D + D + W x H x 18 Speicherstellen. Die zweite Menge N umfasst in dieser Ausführungsform 24 Elemente, vier Erstpfaddisparitäten d1, d2, d3, d4 und je 8 zugehörige Erstpfadnachbardisparitäten d11, d12, d21, d22, d31, d32, d41, d42 sowie vier Restpfaddisparitäten d5, d6, d7, d8 und je 8 zugehörige Restpfadnachbardisparitäten d51, d52, d61, d62, d71, d72, d81, d82.

In einer alternativen Ausführungsform wird nach dem dritten Durchlauf das Gesamtminimum als erstes Gesamtminimum und die resultierende Disparität dmin als erste resultierende Disparität dmin' an die Stelle des Erstpfadminimums und der zugehörigen Disparität gespeichert. Parallel wird mit den im ersten Durchlauf über den gesamten Disparitätsbereich D ermittelten und vorliegende pfadabhängigen Unähnlichkeitskosten der Erstpfade eine Summierung der pfadabhängigen Unähnlichkeitskosten durchgeführt, die an zwei, der ersten resultierenden Disparität dmin' benachbarten, Nachbardisparitäten, beispielsweise dmin'-1 (dmin1) und dmin'+1 (dmin2), in allen Erstpfaden entstehen. Für die Speicherung dieser Erstpfadnachbarteilkosten aUK1dmin1, aUK1dmin2 können die Speicherplätze verwendet werden, in der die nach dem zweiten Durchlauf ermittelten Restpfadnachbarteilkosten aUK2d5, aUK2d6, aUK2d7, aUK2d8 und die zugehörigen Restpfaddisparitäten d5,d6,d7,d8 gespeichert wurden. Da die Erstpfadnachbarteilkosten aUK1 dmin1, aUK1 dmin2 nur Informationen (pfadabhängige Unähnlichkeitskosten) der Erstpfade enthalten, wird ein vierter Durchlauf notwendig. In diesem vierten Durchlauf werden die an den Nachbardisparitäten, in diesem Falle dmin1 und dmin2, entstehenden pfadabhängigen Unähnlichkeitskosten der Restpfade aUK2dmin1, aUK2dmin2 auf die gespeicherten Erstpfadnachbarteilkosten aUK1dmin1, aUK1dmin2 aufaddiert. Aus den so über alle Pfade an den Nachbardisparitäten, in diesem Fall dmin1 und dmin2, akkumulierten pfadabhängigen Unähnlichkeitskosten kUKdmin1, kUKdmin2 und dem gespeicherten ersten Gesamtminimum kann nun ein zweites Gesamtminimum und die zugehörige Disparität als zweite resultierende Disparität mit Subpixelgenauigkeit bestimmt werden. In dieser alternativen, konkreten Ausführungsform sind 4 x 2 + 2 = 10 Speicherstellen zur Zwischenspeicherung notwendig. Insgesamt sind also 3 x W x D + D + W x H x 10 Speicherstellen notwendig. In vorteilhafter Weise ermöglicht diese Ausführungsform die Bestimmung der resultierenden Disparität mit Subpixelgenauigkeit. Die zweite Menge N von Disparitäten umfasst hierbei 10 Disparitäten, vier im ersten Durchlauf bestimmte Erstpfaddisparitäten d1, d2, d3, d4 , vier im zweiten Durchlauf bestimmten Restpfaddisparitäten d5, d6, d7, d8 und 2 Nachbardisparitäten dmin1, dmin2.

In einer weiteren konkreten Ausführungsform wird nach Bestimmung der Erstpfaddisparitäten d1,d2,d3,d4 und der Erstpfadteilkosten aUK1d1, aUK1d2, aUK1d3, aUK1d4 das Minimum der Erstpfadteilkosten aUK1d1min und die zugehörige Disparität d1min aus der Gruppe d1, d2, d3, d4 bestimmt und gespeichert. Hiermit sind nur noch zwei Speicherstellen nach dem ersten Durchlauf notwendig. Im zweiten Durchlauf wird analog das Minimum der Restpfadteilkosten aUK2d2min und die zugehörige Restpfaddisparität aus der Gruppe d5,d6,d7,d8 als d2min bestimmt und gespeichert, wobei vor dem Speichern auf die im ersten Durchlauf gespeicherten Erstpfadteilkosten aUK1d1min die über alle Restpfade an der im ersten Durchlauf gespeicherten Erstpfaddisparität d1min entstehenden pfadabhängigen Unähnlichkeitskosten aUK2d1min addiert werden. Das Ergebnis dieser Addition kUKd1min und die zugehörige Erstpfaddisparität d1min werden in zwei weiteren Speicherstellen gespeichert. Somit sind nach dem zweiten Durchlauf vier Speicherstellen pro Pixel notwendig. In einem dritten Durchlauf werden auf die im zweiten Durchlauf gespeicherten Restpfadteilkosten aUK2d2min die in allen Erstpfaden an der Restpfaddisparität d2min entstehenden pfadabhängigen Unähnlichkeitskosten aUK1d2min addiert. Aus dem Ergebnis dieser Addition kUKd2min und dem gespeicherten Wert der über alle Pfade an der Erstpfaddisparität d1 min komplett akkumulierten pfadabhängigen Unähnlichkeitskosten kUKd1 min werden nun ein Gesamtminimum und die zugehörige Disparität bestimmt. Insgesamt sind für diese Ausführungsform vier Speicherstellen pro Pixel zur Zwischenspeicherung notwendig. Der gesamte Speicherbedarf ergibt sich aus 3 x W x D + D + W x H x 4. Die zweite Menge N von Disparitäten umfasst hierbei zwei Disparitäten d1min, d2min.

In einer erweiterten Ausführungsform werden nach Bestimmung des Minimums der Erstpfadteilkosten aUK1d1min und der zugehörigen Disparität d1min ebenfalls zwei weitere Erstpfadnachbarteilkosten aUK1d1min1, aUK1d1min2 bestimmt und gespeichert. Die Erstpfadnachbarteilkosten entstehen beispielsweise durch die Addition von pfadabhängigen Unähnlichkeitskosten, die in den Erstpfaden an zwei, der Erstpfaddisparität d1min benachbarten, Disparitäten, beispielsweise dmin1-1 (d1min1) und dmin1+1 (d1min2) entstehen. Hiermit sind nach dem ersten Durchlauf insgesamt 4 Speicherplätze notwendig. Im zweiten Durchlauf erfolgt eine analoge Ermittlung von Restpfadnachbarteilkosten aUK2d2min1,aUK2d2min2 an zwei, der Restpfaddisparität d2min benachbarten, Disparitäten, beispielsweise d2min-1 (d2min1) und d2min+1 (d2min2). Gleichzeitig erfolgt eine Addition der pfadabhängigen Unähnlichkeitskosten, die in den Restpfaden an den, der resultierenden Erstpfaddisparität d1min benachbarten Disparitäten d1min1, d1min2 entstehen, auf die gespeicherten Erstpfadnachbarteilkosten aUK1d1min1, aUK1d1min2. Danach wird aus den über alle Pfade an der resultierenden Erstpfaddisparität d1min komplett akkumulierten Unähnlichkeitskosten kUKd1min und den über alle Pfade an den, der resultierenden Erstpfaddisparität d1min benachbarten, Disparitäten d1min1, d1min2 komplett akkumulierten Unähnlichkeitskosten kUKd1min1, kUKd1min2 ein Erstpfadminimum und die zugehörige Disparität mit Subpixelgenauigkeit bestimmt und gespeichert Es werden dafür 2 weitere Speicherplätze benötigt. In einem dritten Durchlauf werden nun die in jedem der Erstpfade an den, der resultierenden Restpfaddisparität d2min benachbarten, Disparitäten d2min1, d2min2 entstehenden pfadabhängigen Unähnlichkeitskosten aUK1d2min1, aUK1d2min2 auf die Restpfadnachbarteilkosten aUK2d2min1, aUK2d2min2 addiert. Aus dem Erstpfadminimum, den über alle Pfade an der resultierenden Restpfaddisparität d2min komplett akkumulierten Unähnlichkeitskosten kUKd2min und den über alle Pfade an den, der resultierenden Restpfaddisparität d2min benachbarten, Disparitäten d2min1,d2min2 komplett akkumulierten Unähnlichkeitskosten kUKd2min1, kUKd2min2 kann nun ein Gesamtminimum und eine Disparität mit Subpixelgenauigkeit bestimmt werden. In diesem Verfahren sind zur Zwischenspeicherung 1 x 4 + 2 = 6 Speicherstellen pro Pixel notwendig. Insgesamt sind 3 x W x D + D + W x H x 6 Speicherstellen notwendig. Die zweite Menge N von Dispariäten umfasst hierbei die Disparitäten d1min und d2min und jeweils zwei benachbarte Disparitäten d1min1, d1min2, d2min1, d2min2, insgesamt also 6 Elemente.

In einer weiteren bevorzugten Ausführungsform erfolgt vor dem Speichern von Daten nach dem ersten und/oder zweiten und/oder dritten Durchlauf eine Komprimierung der zu speichernden Daten. Das Kompressionsverfahren kann dabei beispielsweise aus mehreren Verfahrensschritten bestehen. So werden in einem ersten Verfahrensschritt, der sogenannten Präcodierungsphase, die zu speicherenden Daten linearisiert und mit Hilfe eines linearen Prädiktors dekorreliert. Vorzugsweise werden die Daten dabei in Abhängigkeit einer zu speicherenden Größe linearisiert und dekorreliert, in der die geringste Varianz der pfadabhängigen Unähnlichkeitskosten über die Gesamtmenge der zu speicherenden Daten auftritt. Dies sind zum Beispiel die Disparitätswerte in den zu speichernden Daten. Selbstverständlich sind auch eine Abhängigkeit der Linearisierung von anderen Speichergrößen wie zum Beispiel den Erstpfadteilkosten möglich.

In einem zweiten Verfahrensschritt werden die Residuen, d.h. die Prädiktionsfehler, codiert. Der dazu verwendete Codierer erzeugt einen präfix-freien Code limitierter und variabler Wortlänge. Bevorzugterweise wird für die Codierung eine modifizierter Golomb-Rice-Code verwendet, dessen Parameter statisch anhand von Trainingssequenzen ermittelt wird. Die Trainingssequenzen bestehen dabei vorzugsweise aus Bilddaten, die die in der späteren Anwendung zu erwartende Szenerie am besten wiedergeben. Um die Voraussetzung eines streng positiven Wertebereichs für den Golomb-Rice-Codierer zu gewährleisten, werden in einem Codierungsvorverarbeitungsschritt die Residuen durch eine Modulo-Operation auf einen streng positiven Wertebereich umverteilt. In einem abschließenden Verfahrenschritt werden die codierten Ausgabewörter beispielsweise in einen Ringbuffer abgelegt und in festen Blockgrößen in den externen Speicher transferiert. Die Dekompression der Daten erfolgt umgekehrt symmetrisch zu der Kompression. Anhand des festen und bekannten Parameters der Golomb-Rice-Codierung können die einzelnen Codewörter variabler Länge von den Speicherblöcken gelesen und mit Hilfe des ebenfalls bekannten Prädiktors zurückgerechnet werden.

Das Verfahren der Datenkomprimierung vor dem Speichern von Daten lässt sich auch für das in "Hirschmüller, H. (2008), Stereo Processing by Semi-Global Matching and Mutual Information, in IEEE Transactions on Pattern Analysis and Machine Intelligence, Volume 30(2), February 2008, pp. 328-341" vorgestellte Verfahren anwenden. Hierbei wird in einer ersten Variante der Anwendung die Linearisierung der zu speicherenden Daten in Abhängigkeit der Disparität vorgenommen. Dies bietet sich in vorteilhafter Weise an, da das in "Hirschmüller, H. (2008), Stereo Processing by Semi-Global Matching and Mutual Information, in IEEE Transactions on Pattern Analysis and Machine Intelligence, Volume 30(2), February 2008, pp. 328-341" beschriebene Verfahren pfadabhängige Unähnlichkeitskosten für alle Disparitäten eines vorbestimmten Disparitätsbereichs D speichert. Gleichzeitig kann davon ausgegangen werden, dass die pfadabhängigen Unähnlichkeitskosten für verschiedene Disparitäten eine geringe Varianz aufweisen und sich daher sehr gut zum Komprimieren eignen. In einer zweiten Variante der Anwendung wird die Linearisierung der zu speicherenden Daten in Abhängigkeit der Pixelkoordinaten (x,y) mindestens eines der Stereobilder, vorzugsweise des Ursprungsbilds B1', durchgeführt. Das Verfahren der Codierung wird dabei analog zu der vorher beschriebenen Codierung mit Hilfe eines Golomb-Rice-Codes durchgeführt.

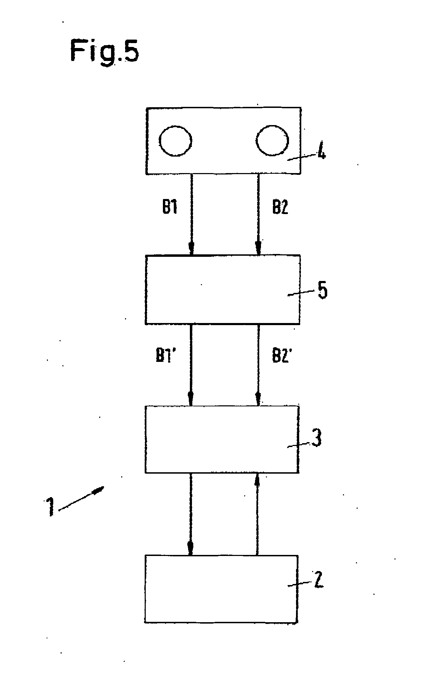

Die Vorrichtung 1 zur Reduktion des Speicherbedarfs bei der Bestimmung von Disparitätswerten von mindestens zwei stereoskopisch aufgenommenen Bildern B1', B2' mit bekannter Epipolargeometrie ist beispielhaft in Fig. 5 dargestellt. Dabei akquiriert eine Stereokamera 4 ein erstes Bild B1 und ein zweites Bild B2. Eine Einheit 5 zur Bestimmung der Epipolargeometrie ist datentechnisch mit der Stereokamera 4 verbunden und bestimmt die Epipolargeometrie der stereoskopisch aufgenommenen Bilder B1, B2. Die stereoskopisch aufgenommenen Bilder B1', B2' mit bekannter Epipolargeometrie werden dann datentechnisch an eine Recheneinheit 3 übertragen. Die Recheneinheit 3 bestimmt die Disparitätswerte der stereoskopisch aufgenommen Bilder B1', B2' mit bekannter Epipolargeometrie. Die dabei anfallenden, zu speicherenden Daten, werden in einer Speichereinheit 2 temporär zwischengespeichert. Die Speichereinheit 2 ist dabei datentechnisch mit der Recheneinheit verbunden.Die zu speichernden Daten umfassen dabei unter anderem die pfadabhängige Unähnlichkeitskosten wie beispielsweise die Erstpfadteilkosten, Restpfadteilkosten, Erstpfadnachbarteilkosten, Restpfadnachbarteilkosten und Disparitäten wie zum Beispiel die Erstpfaddisparitäten und Restpfaddisparitäten.

Die Vorrichtung 1 zur Reduktion des Speicherbedarfs bei der Bestimmung von Disparitätswerten von mindestens zwei stereoskopisch aufgenommenen Bildern B1', B2' mit bekannter Epipolargeometrie ist in einer konkreten Ausführungsform ein handelsüblicher Computer oder ein Computercluster, auf dem das Verfahren zur Reduktion des Speicherbedarfs bei der Bestimmung von Disparitätswerten von mindestens zwei stereoskopisch aufgenommenen Bildern B1', B2' mit bekannter Epipolargeometrie implementiert ist.

In einer weiteren konkreten Ausführungsform umfasst die Recheneinheit der Vorrichtung 1 zur Reduktion des Speicherbedarfs bei der Bestimmung von Disparitätswerten von mindestens zwei stereoskopisch aufgenommenen Bildern B1', B2' mit bekannter Epipolargeometrie einen oder mehrere Field Programmable Gate Arrays (FPGA). Beispielsweise ist die Vorrichtung 1 als handelsüblicher Computer ausgeführt, der um mindestens eine FPGA-Karte erweitert ist, auf denen das Verfahren zur Reduktion des Speicherbedarfs bei der Bestimmung von Disparitätswerten von mindestens zwei stereoskopisch aufgenommenen Bildern B1', B2' mit bekannter Epipolargeometrie implementiert ist.

In einer weiteren konkreten Ausführungsform umfasst die Recheneinheit der Vorrichtung 1 zur Reduktion des Speicherbedarfs bei der Bestimmung von Disparitätswerten von mindestens zwei stereoskopisch aufgenommenen Bildern B1', B2' mit bekannter Epipolargeometrie einen oder mehrere Graphical Processing Units (GPU). Beispielsweise ist die Vorrichtung 1 als handelsüblicher Computer ausgeführt, der um mindestens eine Graphikkarte erweitert ist, auf denen das Verfahren zur Reduktion des Speicherbedarfs bei der Bestimmung von Disparitätswerten von mindestens zwei stereoskopisch aufgenommenen Bildern B1', B2' mit bekannter Epipolargeometrie implementiert ist.

In einer weiteren konkreten Ausführungsform umfasst die Recheneinheit der Vorrichtung 1 zur Reduktion des Speicherbedarfs bei der Bestimmung von Disparitätswerten von mindestens zwei stereoskopisch aufgenommenen Bildern B1', B2' mit bekannter Epipolargeometrie einen oder mehrere Application Specific Integrated Circuit (ASIC).

Die Vorrichtung 1 zur Reduktion des Speicherbedarfs bei der Bestimmung von Disparitätswerten von mindestens zwei stereoskopisch aufgenommenen Bildern B1', B2' mit bekannter Epipolargeometrie kann beispielsweise weiterhin um ein Stereokamerasystem, welches als Eingangssensor funktioniert, erweitert werden, welches eine echtzeitfähige Verarbeitung der Bilddaten ermöglicht. Dabei ist der Wellenlängenbereich des abbildenden Sensors, beispielsweise der Stereokamera, nicht maßgeblich. Vorzugsweise finden Systeme, die im sichtbaren Bereich oder im Infrarotbereich arbeiten, Anwendung. Dies ist z.B. in Collision Avoidance Systemen in Fahr- und Flugzeugen von Bedeutung.

In einer weiteren Ausführungsform kann die Vorrichtung 1 zur Reduktion des Speicherbedarfs bei der Bestimmung von Disparitätswerten von mindestens zwei stereoskopisch aufgenommenen Bildern B1', B2' mit bekannter Epipolargeometrie um eine Beleuchtungseinrichtung erweitert werden. Dieses System kann als Head- und/oder Eye-Tracker eingesetzt werden, bei welchen die Beleuchtungsbedingungen nicht ausreichen, um im Stereokamerasystem Signale mit einem ausreichen Signal-Rausch-Verhältnis zu erzeugen. Eine Beispielanwendung sind Headtracker in Automobilen. Bei ungünstigen Witterungsbedingungen oder Nachtfahren muss hierbei eine aktive Beleuchtung zugeschaltet werden, die das Fahrzeuginnere, insbesondere den Fahrzeugführer, beleuchtet. Um den Fahrzeugführer nicht zu stören, werden in der Regel Lichtquellen verwendet, die im nahen Infrarotbereich arbeiten. Das Stereokamerasystem muss also in dem entsprechenden Wellenlängenbereich sensitiv sein.

In einer weiteren beispielhaften Ausführung kann die Vorrichtung 1 zur Reduktion des Speicherbedarfs bei der Bestimmung von Disparitätswerten von mindestens zwei stereoskopisch aufgenommenen Bildern B1', B2' mit bekannter Epipolargeometrie um ein Head-up Display erweitert werden, wobei das Head-up Display durch die erfindungsgemäße Vorrichtung 1 gesteuert wird. Dies ist beispielsweise ein Fahrzeugsystem mit integriertem Navigations- und Informationssystem, wobei die Daten auf die Frontscheibe eines Fahrzeugs projiziert werden. Dabei ist es von der Kopf- und/oder Augenposition abhängig, wohin die Information projiziert werden müssen.

In einer weiteren Ausführungsform der Vorrichtung 1 zur Reduktion des Speicherbedarfs bei der Bestimmung von Disparitätswerten von mindestens zwei stereoskopisch aufgenommenen Bildern B1', B2' mit bekannter Epipolargeometrie wird die Vorrichtung 1 um ein Inertialmesssystem und/oder ein anderes Positions- und Lagemesssystem, beispielsweise Galileo, GPS oder Pseudolites, erweitert, welches als Eingangssensor funktioniert, um aus den Disparitätskarten Positions- und Lagedaten abzuleiten, um daraus wiederum Aktoren zu steuern. Damit kann beispielsweise das Bremsverhalten des Fahrzeugs gesteuert werden.

In einer weiteren Ausführungsform verarbeitet die Vorrichtung 1 zur Reduktion des Speicherbedarfs bei der Bestimmung von Disparitätswerten von mindestens zwei stereoskopisch aufgenommenen Bildern B1', B2' mit bekannter Epipolargeometrie statt der zwei stereoskopisch aufgenommenen Bildern B1', B2' mit bekannter Epipolargeometrie die aus den beiden stereoskopisch aufgenommenen Bildern B1', B2' mit bekannter Epipolargeometrie abgeleiteten Kantenbilder (Gradientenbilder). Diese Kantenbilder können beispielsweise mit bekannten Kantendetektoren, wie z.B. dem Roberts-Filter, dem Sobel-Filter oder dem Laplace-Filter, erzeugt werden.

In einer weiteren Ausführungsform wird dem Verfahren zur Reduktion des Speicherbedarfs bei der Bestimmung von Disparitätswerten für mindestens zwei stereoskopisch aufgenommene Bilder mit bekannter Epipolargeometrie eine Verarbeitungsstufe nachgeordnet, die durch die Verknüpfung der zweidimensionalen Bilddaten der stereoskopisch aufgenommenen Bilder und der durch das Verfahren erzeugten 3D-PunktWolken Objektkanten und/oder Objektecken extrahiert.

In einer weiteren Ausführungsform wird dem Verfahren zur Reduktion des Speicherbedarfs bei der Bestimmung von Disparitätswerten für mindestens zwei stereoskopisch aufgenommene Bilder mit bekannter Epipolargeometrie eine Verarbeitungsstufe nachgeordnet, die durch Modellierung dreidimensionale Objekte (beispielsweise Fahrzeuge und/oder Häuser) aus den dreidimensionalen Punktwolken, die durch das Verfahren erzeugt wurden, generiert.

In einer weiteren konkreten Ausführungsform der Vorrichtung 1 zur Reduktion des Speicherbedarfs bei der Bestimmung von Disparitätswerten von mindestens zwei stereoskopisch aufgenommenen Bildern B1', B2' mit bekannter Epipolargeometrie wird die Epipolargeometrie in einem Vorverarbeitungsschritt aus den stereoskopisch aufgenommenen Bildern B1, B2 ohne bekannte Epipolargeometrie berechnet.

## Patentansprüche

1. Verfahren zur Reduktion des temporären Arbeitsspeichers bei der Bestimmung von Disparitätswerten für mindestens zwei stereoskopisch aufgenommene Bilder (B1', B2') mit bekannter Epipolargeometrie, bei dem für jedes Pixel (P1) eines ersten Bilds (B1') eine Disparität dmin bestimmt wird, indem für eine Anzahl K von Pfaden, die Im Pixel (P1) münden, in mindestens zwei Durchläufen pfadabhängige Unähnlichkeitskosten anhand einer disparitätsabhängigen Kostenfunktion berechnet und verglichen werden, wobei die disparitätsabhängige Kostenfunktion mindestens ein pixelbasiertes Unähnlichkeitmaß zwischen dem Pixel (P1) und dem, gemäß der jeweiligen Disparität, korrespondierenden Pixel (P2) eines zweiten Bilds (B2') auswertet, wobei in einem ersten Durchlauf für eine Anzahl k1=1,..M von Erstpfaden (L, LO, O, RO) und in einem zweiten Durchlauf für eine Anzahl k2=M+1...K von Restpfaden (R, RU, U, LU) die pfadabhängigen Unähnlichkeitskosten für eine erste vorbestimmte Menge (D) von Disparitäten berechnet werden und für eine zweite vorbestimmte Menge N von Disparitäten die entsprechenden pfadabhängigen Unähnlichkeitskosten der Erstpfade (L, LO, O, RO) und der Restpfade (R. RU, U, LU) akkumuliert werden, wobei die resultierende Disparität dmin als eine Disparität bestimmt wird, bei der eine Akkumulierung von pfadabhängigen Unähnlichkeitskosten ein Minimum aufweist,
wobei
die zweite Menge N von Disparitäten kleiner ist als die erste vorbestimmte Menge (D) von Disparitäten, und wobei die zweite Menge N von Disparitäten mindestens eine Disparität, an der die pfadabhängigen Unähnlichkeitskosten mindestens eines Erstpfades (L, LO, O, RO) ein Minimum der pfadabhängigen Unähnlichkeitskosten aufweisen, und/oder eine Disparität, an der die pfadabhängigen Unähnlichkeitskosten mindestens eines Restpfades (R, RU, U, LU) ein Minimum der pfadabhängigen Unähnlichkeitskosten aufweisen, enthält oder die zweite Menge N von Disparitäten mindestens eine Disparität, die in vorbestimmter Weise von einer Disparität, an der die pfadabhängigen Unähnlichkeitskosten mindestens eines Erstpfades (L, LO, O, RO) ein Minimum der pfadabhängigen Unähnlichkeitskosten aufweisen, entfernt ist und eine Disparität, die in vorbestimmter Weise von einer Disparität, an der die pfadabhängigen Unähnlichkeitskosten mindestens eines Restpfades (R, RU, U, LU) ein Minimum der pfadabhängigen Unähnlichkettskosten aufweisen, entfernt ist, enthält,
wobei für die zweite vorbestimmte Menge N von Disparitäten die Akkumulierung von entsprechenden pfadabhängigen Unähnlichkeitskosten dem ersten Durchlauf folgend erfolgt.

2. Verfahren nach Anspruch 1, **dadurch gekennzeichnet, dass** nach dem ersten Durchlauf für jeden der Erstpfade (L, LO, O, RO) die Erstpfaddisparität (d1, d2, d3, d4), bei der die jeweiligen pfadabhängigen Unähnlichkeltskosten UK1dk1 minimal sind, bestimmt, gespeichert und in die zweite Menge N von Disparitäten aufgenommen wird und nach dem zweiten Durchlauf für jeden der Restpfade (R, RU, U, LU) eine Restpfaddisparität d5, d6, d7, d8, bei der die jeweiligen pfadabhängigen Unähnlichkeitskosten minimal sind, bestimmt, gespeichert und in die zweite Menge N von Disparitäten aufgenommen wird und in einem dritten Durchlauf werden über jeden der Erstpfade (L, LO, O, RO) an den Erstpfaddisparitäten (d1, d2, d3, d4) und den Restpfaddisparitäten d5, d6, d7, d8 akkumulierte Unähnlichkeitskosten bestimmt und ein einem vierten Durchlauf werden über jeden der Restpfade (R, RU, U, LU) an den Erstpfaddisparitäten (d1, d2, d3, d4) und den Restpfaddisparitäten d5, d6, d7, d8 akkumulierte Unähnlichkeitskosten bestimmt, wobei aus den so über Erstpfade (L, LO, O, RO) und Restpfade (R, RU, U, LU) an den Erstpfaddisparitäten (d1, d2, d3, d4) und den Restpfaddisparitäten d5, d6, d7, d8 komplett akkumulierten Unähnlichkeitskosten ein Gesamtminimum und die zugehörige Disparität als resultierende Disparität dmin bestimmt wird.

3. Verfahren nach Anspruch 1, **dadurch gekennzeichnet, dass** die zweite Menge N von Disparitäten eine Erstpfaddisparität (d1, d2, d3, d4) für jeden Erstpfad (L, LO, O, RO) und eine Restpfaddisparität d5, d6, d7, d8 für jeden Restpfad (R, RU, U, LU) enthält, wobei nach dem ersten Durchlauf für jeden der Erstpfade (L, LO, O, RO) die Erstpfaddisparität (d1, d2, d3, d4), bei der die jeweiligen pfadabhängigen Unähnlichkeitskosten UK1dk1 minimal sind, bestimmt, gespeichert und in die zweite Menge N von Disparitäten aufgenommen wird und die über jeden der Erstpfade (L, LO, O, RO) an der Erstpfaddisparität (d1, d2, d3, d4) akkumulierten Unähnlichkeitskosten als Erstpfadteilkosten (aUK1d1, aUK1d2, aUK1d3, aUK1d4) gespeichert werden und nach dem zweiten Durchlauf für jeden der Restpfade (R, RU, U, LU) eine Restpfaddisparität d5, d6, d7, d8, bei der die jeweiligen pfadabhängigen Unähnlichkeitskosten aUK2d5, aUK2d6, aUK2d7, aUK2d8 minimal sind, bestimmt, gespeichert und in die zweite Menge N von Disparitäten aufgenommen wird und die über jeden der Restpfade (R, RU, U, LU) an der Restpfaddisparität d5, d6, d7, d8 akkumulierten Unähnlichkeltskosten als Restpfadteilkosten aUK2d5, aUK2d6, aUK2d7, aUK2d8 gespeichert werden, wobei vor dem Speichern die in jedem der Restpfade (R, RU, U, LU) an den Erstpfaddisparitäten (d1, d2, d3, d4) entstehenden Unähnlichkeitskosten aUK2d1, aUK2d2, aUK2d3, aUK2d4 zu den gespeicherten Erstpfadteilkosten (aUK1d1, aUK1d2, aUK1d3, aUK1d4) hinzugefügt werden und ein Erstpfadminimum der so über Erstpfade (L, LO, O, RO) und Restpfade (R, RU, U, LU) an den Erstpfaddisparitäten (d1, d2, d3, d4) komplett akkumulierten Unähnlichkeitskosten, kUKd1, kUKd2, kUKd3, kUKd4 bestimmt und mit der zugehörigen Erstpfaddisparität (d1, d2, d3, d4) gespeichert wird,
und in einem dritten Durchlauf die in jedem der Erstpfade (L, LO, O, RO) an den Restpfaddisparitäten d5, d6, d7, d8 entstehenden Unähnlichkeitskosten zu den gespeicherten Restpfadteilkosten aUK2d5, aUK2d6, aUK2d7, aUK2d8 hinzugefügt werden und aus den so über Erstpfade (L, LO, O, RO) und Restpfade (R, RU, U, LU) an der Restpfaddisparität d5, d6, d7, d8 komplett akkumulierten Unähnlichkeitskosten kUKd5, kUKd6, kUKd7, kUKd8 und dem Erstpfadminimum ein Gesamtminimum und die zugehörige Disparität als resultierende Disparität dmin bestimmt wird.

4. Verfahren nach Anspruch 3, **dadurch gekennzeichnet, dass** die zweite Menge N von Disparitäten zusätzlich mindestens eine der Erstpfaddisparität benachbarte Erstpfadnachbardisparität und mindestens eine der Restpfaddisparität benachbarte Restpfadnachbardisparität enthält,
wobei nach dem ersten Durchlauf für jeden Erstpfad mindestens eine der Erstpfaddisparität benachbarte Erstpfadnachbardisparität bestimmt und in die zweite Menge N von Disparitäten aufgenommen wird und zusätzlich die über jeden der Erstpfade an mindestens einer der Erstpfaddisparität benachbarten Erstpfadnachbardisparität akkumulierten Unähnlichkeitskosten als Erstpfadnachbarteilkosten gespeichert werden und nach dem zweiten Durchlauf für jeden Restpfad mindestens eine der Restpfaddisparität benachbarte Restpfadnachbardisparität bestimmt und in die zweite Menge N von Disparitäten aufgenommen wird und zusätzlich die über jeden der Restpfade an mindestens einer der Restpfaddisparität benachbarten Restpfadnachbardisparität akkumulierten Unähnlichkeitskosten als Restpfadnachbarteilkosten gespeichert werden, wobei vor dem Speichern die in jedem der Restpfade an den Erstpfadnachbardisparitäten entstehenden Unähnlichkeitskosten zu den gespeicherten Erstpfadnachbarteilkosten hinzugefügt werden und das Erstpfadminimum aus den über Erstpfade und Restpfade an den Erstpfaddisparitäten und den Erstpfadnachbardisparitäten komplett akkumulierten Unähnlichkeitskosten bestimmt und gespeichert wird, und in einem dritten Durchlauf für zusätzlich die in jedem der Erstpfade an den Restpfadnachbardisparitäten entstehenden Unähnlichkeitskosten zu den gespeicherten Restpfadnachbarteilkosten hinzugefügt werden und aus den so über Erstpfade und Restpfade an den Restpfaddisparitäten und den Restpfadnachbardisparitäten komplett akkumulierten Unähnlichkeitskosten und dem Erstpfadminimum ein Gesamtminimum und die zugehörige Disparität als resultierende Disparität dmin bestimmt wird.

5. Verfahren nach Anspruch 3, **dadurch gekennzeichnet, dass** die zweite Menge N von Disparitäten mindestens eine erste resultierende Disparität dmin' und mindestens eine, der ersten resultierenden Disparität dmin' benachbarte, Nachbardisparität dmin1 enthält, wobei nach Bestimmung des Gesamtminimums und der resultierenden Disparität dmin nach dem dritten Durchlauf zusätzlich das Gesamtminimum als erstes Gesamtminimum, die resultierende Disparität dmin als die erste resultierende Disparität dmin' und die über jeden der Erstpfade an mindestens der, der ersten resultierenden Disparität dmin' benachbarten, Nachbardisparität dmin1 akkumulierten Unähnlichkeitskosten als Nachbarteilkosten gespeichert werden und nach einem vierten Durchlauf die über jeden der Restpfade an der Nachbardisparität dmin1 akkumulierten Unähnlichkeitskosten zu den Nachbarteilkosten hinzugefügt werden und aus den so über Erstpfade und Restpfade an der Nachbardisparität dmin1 komplett akkumulierten Unähnlichkeitskosten und dem ersten Gesamtminimum ein zweites Gesamtminimum und die zugehörige Disparität, als zweite, resultierende Disparität dmin bestimmt wird.

6. Verfahren nach Anspruch 1, **dadurch gekennzeichnet, dass** die zweite Menge N von Disparitäten eine resultierende Erstpfaddisparität d1min und eine resultierende Restpfaddisparität d2min enthält, wobei nach dem ersten Durchlauf für jeden der Erstpfade die Erstpfaddisparität, bei der die jeweiligen pfadabhängigen Unähnlichkeitskosten minimal sind, und die über jeden der Erstpfade an der Erstpfaddisparität akkumulierten Unähnlichkeitskosten als Erstpfadteilkosten bestimmt werden, wobei das Minimum der Erstpfadteilkosten bestimmt und gespeichert wird und die zugehörige Disparität als resultierende Erstpfaddisparität d1min gespeichert und in die zweite Menge N von Disparitäten aufgenommen wird und in einem zweiten Durchlauf für jeden der Restpfade die Restpfaddisparität, bei der die jeweiligen pfadabhängigen Unähnlichkeitskosten minimal sind, und die über jeden der Restpfade an der Restpfaddisparität akkumulierten Unähnlichkeitskosten als Restpfadteilkosten bestimmt werden, wobei das Minimum der Restpfadteilkosten bestimmt und gespeichert wird und die zugehörige Disparität als resultierende Restpfaddisparität gespeichert und in die zweite Menge N von Disparitäten aufgenommen wird, wobei vor dem Speichern die in jedem der Restpfade an der resultierenden Erstpfaddisparität entstehenden Unähnlichkeitskosten zu dem Minimum der Erstpfadteilkosten hinzugefügt werden und die so über Erstpfade und Restpfade an der resultierenden Erstpfaddisparität komplett akkumulierten Unähnlichkeitskosten als Erstpfadminimum gespeichert werden und in einem dritten Durchlauf die in jedem der Erstpfade an der resultierenden Restpfaddisparität entstehenden Unähnlichkeitskosten zu dem Minimum der Restpfadteilkosten hinzugefügt werden und aus den so über Erstpfade und Restpfade an der resultierenden Restpfaddisparität komplett akkumulierten Unähnlichkeitskosten und dem Erstpfadminimum ein Gesamtminimum und die zugehörige Disparität als resultierende Disparität dmin bestimmt wird.

7. Verfahren nach Anspruch 6, **dadurch gekennzeichnet, dass** die zweite Menge N von Disparitäten zusätzlich mindestens eine, der resultierenden Erstpfaddisparität d1 min benachbarte, Disparität d1 min1 und mindestens eine, der resultierenden Restpfaddisparität d2min benachbarte, Disparität d2min1 enthält,
wobei nach dem ersten Durchlauf zusätzlich mindestens eine, der resultierenden Erstpfaddisparität d1min benachbarten, Disparität d1 min1 bestimmt und in die zweite Menge N von Disparitäten aufgenommen wird und über jeden der Erstpfade an der, der resultierenden Erstpfaddisparität d1min benachbarten, Disparität d1min1 akkumulierten UnähnlichKeitskosten als Erstpfadnachbarteilkosten aUK1d1 min1 gespeichert werden und nach dem zweiten Durchlauf zusätzlich mindestens eine, der resultierenden Restpfaddisparität d2min benachbarten, Disparität d2min1 bestimmt und in die zweite Menge N von Disparitäten aufgenommen wird und die über jeden der Restpfade an der, der resultierenden Restpfaddisparität d2min benachbarten, Disparität d2min1 akkumulierten Unähnlichkeitskosten als Restpfadnachbarteilkosten aUK2d2min1 gespeichert werden, wobei vor dem Speichern zusätzlich die in jedem der Restpfade an der, der resultierenden Erstpfaddisparität d1min benachbarten, Disparität d1min1 entstehenden Unähnlichkeitskosten UK2d1min1 zu den Erstpfadnachbarteilkosten aUK1d1min1 hinzugefügt und das Erstpfadminimum aus den so über Erstpfade und Restpfade an der resultierenden Erstpfaddisparität d1min und an der, der resultierenden Erstpfaddisparität d1min benachbarten, Disparität d1min1 komplett akkumulierten Unähnlichkeitskosten bestimmt und mit der zugehörigen Disparität gespeichert wird und in einem dritten Durchlauf zusätzlich die über jeden der Erstpfade an der, der resultierenden Restpfaddisparität d2min benachbarten, Disparität d2min1 enstehenden Unähnlichkeitskosten UK1d2min1 zu den Restpfadnachbarteilkosten aUK2d2min1 hinzugefügt werden und aus den so über Erstpfade und Restpfade an der resultierenden Restpfaddisparität d2min und der, der resultierenden Restpfaddisparität d2min benachbarten, Disparität d2min1 komplett akkumulierten Unähnlichkeitskosten und dem dem Erstpfadminimum ein Gesamtminimum und die zugehörige Disparität als resultierende Disparität dmin bestimmt wird.

8. Verfahren nach einem der vorangegangenen Ansprüche, **dadurch gekennzeichnet, dass** vor mindestens einer Speicherschreibeoperation eine Kompression der zu speichenden Daten und nach der Speicherieseoperation, die die in der Speicherschreibeoperation gespeicherten Daten liest, eine Dekompression der gespeicherten Daten stattfindet.

9. Vorrichtung (1) zur Reduktion des temporären Arbeitsspeichers bei der Bestimmung von Disparitätswerten von mindestens zwei stereoskopisch aufgenommenen Bildern (B1', B2') mit bekannter Epipolargeometrie, umfassend mindestens eine Speichereinheit (2) und eine mit der Speichereinheit datentechnisch verbundene Recheneinheit (3), bei der für jedes Pixel (P1) eines ersten Bilds (B1') eine Disparität dmin bestimmt wird, indem für eine Anzahl K von Pfaden, die im Pixel (P1) münden, in mindestens zwei Durchläufen pfadabhängige Unähnlichkeitskosten anhand einer disparitätsabhängigen Kostenfunktion berechnet und verglichen werden, wobei die disparitätsabhängige Kostenfunktion mindestens ein pixelbasiertes Unähnlichkeitmaß zwischen dem Pixel (P1) und dem, gemäß der jeweiligen Disparität, korrespondierenden Pixel (P2) eines zweiten Bildes (B2') auswertet, wobei in einem ersten Durchlauf für eine Anzahl k1=1...M von Erstpfaden (L, LO, O, RO) und in einem zweiten Durchlauf für eine Anzahl k2=M+1...K von Restpfaden (R, RU, U, LU) die pfadabhängigen Unähnlichkeitskosten für eine erste vorbestimmte Menge (D) von Disparitäten berechnet werden und für eine zweite vorbestimmte Menge N von Disparitäten die entsprechenden pfadabhängigen Unähnlichkeitskosten der Erstpfade (L, LO, O, RO) und der Restpfade (R, RU, U, LU) akkumuliert werden, wobei die resultierende Disparität dmin als eine Disparität bestimmt wird, bei der eine Akkumulierung von pfadabhängigen Unähnlichkeitskosten ein Minimum aufweist, wobei die zweite Menge N von Disparitäten kleiner ist als die erste vorbestimmte Menge (D) von Disparitäten, und wobei die zweite Menge N von Disparitäten mindestens eine Disparität, an der die pfadabhänglgen Unähnlichkeitskosten mindestens eines Erstpfades (L, LO, O, RO) ein Minimum der pfadabhänglgen Unähnlichkeftskosten aufweisen, und eine Disparität, an der die pfadabhängigen Unähnlichkeitskosten mindestens eines Restpfades (R, RU, U, LU) ein Minimum der pfadabhängigen Unähnüchkeitskosten aufweisen, enthält oder die zweite Menge N von Disparitäten mindestens eine Disparität, die in vorbestimmter Weise von einer Disparität, an der die pfadabhängigen Unähnlichkeltskosten mindestens eines Erstpfades (L, LO, O, RO) ein Minimum der pfadabhängigen Unähnlichkeitskosten aufweisen, entfernt ist und/oder eine Disparität, die in vorbestimmter Weise von einer Disparität, an der die pfadabhängigen Unähnlichkeitskosten mindestens eines Restpfades (R, RU, U, LU) ein Minimum der pfadabhängigen Unähnlichkeitskosten aufweisen, entfernt ist, enthält, und wobei die Akkumulierung von entsprechenden pfadabhängigen Unähnlichkeitskosten für eine zweite vorbestimmte Menge N von Disparitäten dem ersten Durchlauf folgend erfolgt.

## Claims

1. Method for reducing the temporary main memory when determining disparity values for at least two stereoscopically recorded images (B1', B2') with known epipolar geometry, in the case of which a disparity dmin is determined for each pixel (P1) of a first image (B1') by calculating and comparing for a number K of paths, which terminate in the pixel (P1), path-dependent dissimilarity costs in at least two runs with the aid of a disparity-dependent cost function, the disparity-dependent cost function evaluating at least one pixel-based dissimilarity measure between the pixel (P1) and the pixel (P2), corresponding to the respective disparity, of a second image (B2'), in a first run for a number k1 = 1...M of first paths (L, LO, O, RO) and in a second run for a number k2 = M+1...K of remaining paths (R, RU, U, LU) the path-dependent dissimilarity costs being calculated for a first predetermined set (D) of disparities, and the corresponding path-dependent dissimilarity costs of the first paths (L, LO, O, RO) and of the remaining paths (R, RU, U, LU) being accumulated for a second predetermined set N of disparities, the resulting disparity dmin being determined as a disparity for which an accumulation of path-dependent dissimilarity costs have a minimum,
in which
the second set N of disparities is smaller than the first predetermined set (D) of disparities, the second set N of disparities containing at least one disparity at which the path-dependent dissimilarity costs of at least one first path (L, LO, O, RO) has a minimum of the path-dependent dissimilarity costs and/or having a disparity at which the path-dependent dissimilarity costs of at least one remaining path (R, RU, U, LU) have a minimum of the path-dependent dissimilarity costs, or the second set N of disparities containing at least one disparity which is remote in a predetermined way from a disparity at which the path-dependent dissimilarity costs of at least one first path (L, LO, O, RO) have a minimum of the path-dependent dissimilarity costs, and a disparity which is remote in a predetermined way from a disparity at which the path-dependent dissimilarity costs of at least one remaining path (R, RU, U, LU) have a minimum of the path-dependent dissimilarity costs,
the accumulation of corresponding path-dependent dissimilarity costs being performed for the second predetermined set N of disparities following the first run.

2. Method according to Claim 1, **characterized in that** after the first run for each of the first paths (L, LO, O, RO) the first path disparity (d1, d2, d3, d4) for which the respective path-dependent dissimilarity costs UK1dk1 are minimum is determined, stored and accepted into the second set N of disparities, and after the second run for each of the remaining paths (R, RU, U, LU) a remaining path disparity d5, d6, d7, d8 for which the respective path-dependent dissimilarity costs are minimum is determined, stored and accepted into the second set N of disparities, and in a third run dissimilarity costs accumulated over each of the first paths (L, LO, O, RO) at the first path disparities (d1, d2, d3, d4) and at the remaining path disparities d5, d6, d7, d8 are determined, and in a fourth run dissimilarity costs accumulated over each of the remaining paths (R, RU, U, LU) at the first path disparities (d1, d2, d3, d4) and at the remaining path disparities d5, d6, d7, d8 are determined, an overall minimum and the associated disparity being determined as resulting disparity dmin from the dissimilarity costs thus completely accumulated over first paths (L, LO, O, RO) and remaining paths (R, RU, U, LU) at the first path disparities (d1, d2, d3, d4) and at the remaining path disparities d5, d6, d7, d8.

3. Method according to Claim 1, **characterized in that** the second set N of disparities contains a first path disparity (d1, d2, d3, d4) for each first path (L, LO, O, RO) and a remaining path disparity d5, d6, d7, d8 for each remaining path (R, RU, U, LU), after the first run for each of the first paths (L, LO, O, RO) the first path disparity (d1, d2, d3, d4), for which the respective path-dependent dissimilarity costs UK1dk1 are minimum, is determined, stored and accepted into the second set N of disparities and the dissimilarity costs accumulated over each of the first paths (L, LO, O, RO) at the first path disparity (d1, d2, d3, d4) are stored as first path partial costs (aUK1d1, aUK1d2, aUK1d3, aUK1d4), and after the second run for each of the remaining paths (R, RU, U, LU) a remaining path disparity d5, d6, d7, d8, for which the respective path-dependent dissimilarity costs aUK2d5, aUK2d6, aUK2d7, aUK2d8 are minimum, is determined, stored and accepted into the second set N of disparities, and the dissimilarity costs accumulated over each of the remaining paths (R, RU, U, LU) at the remaining path disparity d5, d6, d7, d8 are stored as remaining path partial costs aUK2d5, aUK2d6, aUK2d7, aUK2d8, before storage the dissimilarity costs aUK2d1, aUK2d2, aUK2d3, aUK2d4 resulting in each of the remaining paths (R, RU, U, LU) at the first path disparities (d1, d2, d3, d4) being added to the stored first path partial costs (aUK1d1, aUK1d2, aUK1d3, aUK1d4), and a first path minimum of the dissimilarity costs kUKd1, kUKd2, kUKd3, kUKd4 thus completely accumulated over first paths (L, LO, O, RO) and remaining paths (R, RU, U, LU) at the first path disparities (d1, d2, d3, d4) being determined and stored with the associated first path disparity (d1, d2, d3, d4), and in a third run the dissimilarity costs resulting in each of the first paths (L, LO, O, RO) at the remaining path disparities d5, d6, d7, d8 are added to the stored remaining path partial costs aUK2d5, aUK2d6, aUK2d7, aUK2d8, and an overall minimum and the associated disparity are determined as resulting disparity dmin from the dissimilarity costs kUKd5, kUKd6, kUKd7, kUKd8 thus completely accumulated over first paths (L, LO, O, RO) and remaining paths (R, RU, U, LU) at the remaining path disparity d5, d6, d7, d8 and the first path minimum.

4. Method according to Claim 3, **characterized in that** the second set N of disparities additionally contains at least one first path adjacent disparity adjacent to the first path disparity and at least one remaining path adjacent disparity adjacent to the remaining path disparity, after the first run for each first path at least one first path adjacent disparity adjacent to the first path disparity is determined and accepted into the second set N of disparities and, in addition, the dissimilarity costs accumulated over each of the first paths at at least one first path adjacent disparity adjacent to the first path disparity being stored as first path adjacent partial costs, and after the second run for each remaining path at least one remaining path adjacent disparity adjacent to the remaining path disparity being determined and accepted into the second set N of disparities and, in addition, the dissimilarity costs accumulated over each of the remaining paths at at least one remaining path adjacent disparity adjacent to the remaining path disparity being stored as remaining path adjacent partial costs, before storage the dissimilarity costs resulting in each of the remaining paths at the first path adjacent disparities being added to the stored first path adjacent partial costs, and the first path minimum being determined from the dissimilarity costs completely accumulated via first paths and remaining paths at the first path disparities and the first path adjacent disparities and stored, and in a third run the dissimilarity costs resulting in each of the first paths at the remaining path adjacent disparities are additionally added to the stored remaining path adjacent partial costs, and an overall minimum and the associated disparity are determined as resulting disparity dmin from the dissimilarity costs thus completely accumulated over first paths and remaining paths at the remaining path disparities and the remaining path adjacent disparities, and the first path minimum.

5. Method according to Claim 3, **characterized in that** the second set N of disparities contains at least one first resulting disparity dmin' and at least one adjacent disparity dmin1 adjacent to the first resulting disparity dmin', following determination of the total minimum and the resulting disparity dmin, after the third run in addition the overall minimum is stored as first overall minimum, the resulting disparity dmin is stored as the first resulting disparity dmin' and the dissimilarity costs accumulated over each of the first paths at at least the adjacent disparity dmin1 adjacent to the first resulting disparity dmin' are stored as adjacent partial costs, and after a fourth run the dissimilarity costs accumulated over each of the remaining paths at the adjacent disparity dmin1 are added to the adjacent partial costs, and a second overall minimum and the associated disparity are determined as second, resulting disparity dmin from the dissimilarity costs thus completely accumulated over first paths and remaining paths at the adjacent disparity dmin1, and the first overall minimum.

6. Method according to Claim 1, **characterized in that** the second set N of disparities contains a resulting first path disparity d1min and a resulting remaining path disparity d2min, after the first run for each of the first paths the first path disparity, for which the respective path-dependent dissimilarity costs are minimum, and the dissimilarity costs accumulated via each of the first paths at the first path disparity being determined as first path partial costs, the minimum of the first path partial costs being determined and stored and the associated disparity being stored as resulting first path disparity d1min and being accepted into the second set N of disparities, and in a second run for each of the remaining paths the remaining path disparity, for which the respective path-dependent dissimilarity costs are minimum, and the dissimilarity costs accumulated over each of the remaining paths at the remaining path disparity are determined as remaining path partial costs, the minimum of the remaining path partial costs being determined and stored, and the associated disparity being stored as resulting remaining path disparity and being accepted into the second set N of disparities, before storage the dissimilarity costs resulting in each of the remaining paths at the resulting first path disparity being added to the minimum of the first path partial costs and the dissimilarity costs thus completely accumulated over first paths and remaining paths at the resulting first path disparity being stored as first path minimum, and in a third run the dissimilarity costs resulting in each of the first paths at the resulting first path disparity being added to the minimum of the remaining path partial costs, and an overall minimum and the associated disparity being determined as resulting disparity dmin from the dissimilarity costs thus completely accumulated over first paths and remaining paths at the resulting remaining path disparity, and the first path minimum.

7. Method according to Claim 6, **characterized in that** the second set N of disparities additionally contains at least one disparity dlminl adjacent to the resulting first path disparity d1min and at least one disparity d2minl adjacent to the resulting remaining path disparity d2min, after the first run at least one disparity d1min1 adjacent to the resulting first path disparity d1min additionally being determined and accepted into the second set N of disparities, and dissimilarity costs accumulated over each of the first paths at the disparity d1min1 adjacent to the resulting first path disparity d1min being stored as first path adjacent partial costs aUK1d1min1, and after the second run at least one disparity d2minl adjacent to the resulting remaining path disparity d2min additionally being determined and accepted into the second set N of disparities, and the dissimilarity costs accumulated over each of the remaining paths at the disparity d2minl adjacent to the resulting remaining path disparity d2min are stored as remaining path adjacent partial costs aUK2d2min1, before storage the dissimilarity costs UK2d1min1 resulting in each of the remaining paths at the disparity d1min1 adjacent to the resulting first path disparity d1min additionally being added to the first path adjacent partial costs aUK1d1min1, and the first path minimum being determined from the dissimilarity costs thus completely accumulated over first paths and remaining paths at the resulting first path disparity d1min and at the disparity d1min1 adjacent to the resulting first path disparity d1min and being stored with the associated disparity, and in a third run the dissimilarity costs UK1d2min1 resulting over each of the first paths at the disparity d2minl adjacent to the resulting remaining path disparity d2min are additionally added to the remaining path adjacent partial costs aUK2d2min1, and an overall minimum and the associated disparity are determined as resulting disparity dmin from the dissimilarity costs thus completely accumulated over first paths and remaining paths at the resulting remaining path disparity d2min and the disparity d2minl adjacent to the resulting remaining path disparity d2min, and the first path minimum.

8. Method according to one of the preceding claims, **characterized in that** before at least one memory write operation a compression of the data to be stored takes place, and after the memory write operation, which reads the data stored in the memory write operation, a decompression of the stored data takes place.

9. Device (1) for reducing the temporary main memory when determining disparity values of at least two stereoscopically recorded images (B1', B2') with known epipolar geometry, comprising at least one memory unit (2) and an arithmetic logic unit (3) connected for data communication to the memory unit, in the case of which a disparity dmin is determined for each pixel (P1) of a first image (B1') by calculating and comparing for a number K of paths, which terminate in the pixel (P1), path-dependent dissimilarity costs in at least two runs with the aid of a disparity-dependent cost function, the disparity-dependent cost function evaluating at least one pixel-based dissimilarity measure between the pixel (P1) and the pixel (P2), corresponding to the respective disparity, of a second image (B2'), in a first run for a number k1 = 1...M of first paths (L, LO, O, RO) and in a second run for a number k2 = M+1...K of remaining paths (R, RU, U, LU) the path-dependent dissimilarity costs being calculated for a first predetermined set (D) of disparities, and the corresponding path-dependent dissimilarity costs of the first paths (L, LO, O, RO) and of the remaining paths (R, RU, U, LU) being accumulated for a second predetermined set N of disparities, the resulting disparity dmin being determined as a disparity for which an accumulation of path-dependent dissimilarity costs has a minimum,
in which
the second set N of disparities is smaller than the first predetermined set (D) of disparities, the second set N of disparities containing at least one disparity at which the path-dependent dissimilarity costs of at least one first path (L, LO, O, RO) has a minimum of the path-dependent dissimilarity costs and having a disparity at which the path-dependent dissimilarity costs of at least one remaining path (R, RU, U, LU) have a minimum of the path-dependent dissimilarity costs, or the second set N of disparities containing at least one disparity which is remote in a predetermined way from a disparity at which the path-dependent dissimilarity costs of at least one first path (L, LO, O, RO) have a minimum of the path-dependent dissimilarity costs, and/or a disparity which is remote in a predetermined way from a disparity at which the path-dependent dissimilarity costs of at least one remaining path (R, RU, U, LU) have a minimum of the path-dependent dissimilarity costs, and the accumulation of corresponding path-dependent dissimilarity costs for a second predetermined set N of disparities being performed following the first run.

## Revendications

1. Procédé de réduction de la mémoire de travail temporaire lors de la détermination de valeurs de disparité pour au moins deux images acquises de manière stéréoscopique (B1', B2') présentant une géométrie épipolaire connue, dans lequel, pour chaque pixel (P1) d'une première image (B1'), on détermine une disparité dmin, en calculant et comparant, pour un nombre K de trajets conduisant au pixel (P1), en au moins deux passes, des coûts de dissemblance dépendants du trajet à l'aide d'une fonction de coût dépendante de la disparité, dans lequel la fonction de coût dépendante de la disparité évalue au moins une mesure de dissemblance basée sur des pixels entre le pixel (P1) et le pixel (P2) correspondant d'une deuxième image (B2'), selon la disparité respective, dans lequel, lors d'une première passe, pour un nombre k1 = 1...M de premiers trajets (L, LO, O, RO) et lors d'une deuxième passe, pour un nombre k2 = M+1...K de trajets restants (R, RU, U, LU), on calcule les coûts de dissemblance dépendants du trajet pour une première quantité prédéterminée (D) de disparités et, pour une deuxième quantité prédéterminée N de disparités, on accumule les coûts de dissemblance dépendants du trajet correspondants des premiers trajets (L, LO, O, RO) et des trajets restants (R, RU, U, LU), dans lequel la disparité résultante dmin est déterminée en tant que disparité pour laquelle une accumulation de coûts de dissemblance dépendants du trajet présente un minimum, dans lequel la deuxième quantité N de disparités est inférieure à la première quantité prédéterminée (D) de disparités, et dans lequel la deuxième quantité N de disparités contient au moins une disparité pour laquelle les coûts de dissemblance dépendants du trajet d'au moins un premier trajet (L, LO, O, RO) présentent un minimum des coûts de dissemblance dépendants du trajet, et/ou une disparité pour laquelle les coûts de dissemblance dépendants du trajet d'au moins un trajet restant (R, RU, U, LU) présentent un minimum des coûts de dissemblance dépendants du trajet, ou la deuxième quantité N de disparités contient au moins une disparité qui s'écarte de manière prédéterminée d'une disparité pour laquelle les coûts de dissemblance dépendants du trajet d'au moins un premier trajet (L, LO, O, RO) présentent un minimum des coûts de dissemblance dépendants du trajet et une disparité qui s'écarte de manière prédéterminée d'une disparité pour laquelle les coûts de dissemblance dépendants du trajet d'au moins un trajet restant (R, RU, U, LU) présentent un minimum des coûts de dissemblance dépendants du trajet, dans lequel, pour la deuxième quantité prédéterminée N de disparités, l'accumulation de coûts de dissemblance dépendants du trajet correspondants s'effectue à la suite de la première passe.

2. Procédé selon la revendication 1, **caractérisé en ce qu'**après la première passe, pour chacun des premiers trajets (L, LO, O, RO), on détermine la disparité de premier trajet (d1, d2, d3, d4) pour laquelle les coûts de dissemblance dépendants du trajet respectifs UK1dk1 sont minimum, on la stocke et on l'intègre à la deuxième quantité N de disparités et **en ce qu'**après la deuxième passe, pour chacun des trajets restants (R, RU, U, LU), on détermine une disparité de trajet restant d5, d6, d7, d8 pour laquelle les coûts de dissemblance dépendants du trajet respectifs sont minimum, on la stocke et on l'intègre à la deuxième quantité N de disparités et, lors d'une troisième passe, on détermine des coûts de dissemblance accumulés pour les disparités de premiers trajets (d1, d2, d3, d4) et les disparités de trajets restants d5, d6, d7, d8 et, lors d'une quatrième passe, on détermine des coûts de dissemblance accumulés sur chacun des trajets restants (R, RU, U, LU) pour les disparités de premiers trajets (d1, d2, d3, d4) et les disparités de trajets restants d5, d6, d7, d8, dans lequel on détermine un minimum global et la disparité associée en tant que disparité résultante dmin à partir des coûts de dissemblance ainsi entièrement accumulés sur des premiers trajets (L, LO, O, RO) et des trajets restants (R, RU, U, LU) pour les disparités de premiers trajets (d1, d2, d3, d4) et les disparités de trajets restants d5, d6, d7, d8.

3. Procédé selon la revendication 1, **caractérisé en ce que** la deuxième quantité N de disparités contient une disparité de premier trajet (d1, d2, d3, d4) pour chaque premier trajet (L, LO, O, RO) et une disparité de trajet restant d5, d6, d7, d8 pour chaque trajet restant (R, RU, U, LU), dans lequel, après la première passe, pour chacun des premiers trajets (L, LO, O, RO), on détermine la disparité de premier trajet (d1, d2, d3, d4) pour laquelle les coûts de dissemblance dépendants du trajet respectifs UK1dk1 sont minimum, on la stocke et on l'intègre à la deuxième quantité N de disparités et on stocke les coûts de dissemblance accumulés sur chacun des premiers trajets (L, LO, O, RO) pour la disparité de premier trajet (d1, d2, d3, d4) en tant que coûts partiels de premiers trajets (aUK1d1, aUK1d2, aUK1d3, aUK1d4) et, après la deuxième passe, pour chacun des trajets restants (R, RU, U, LU), on détermine une disparité de trajet restant d5, d6, d7, d8 pour laquelle les coûts de dissemblance dépendants du trajet respectifs aUK2d4, aUK2d6, aUK2d7, aUK2d8 sont minimum, on la stocke et on l'intègre à la deuxième quantité N de disparités et on stocke les coûts de dissemblance accumulés sur chacun des trajets restants (R, RU, U, LU) pour la disparité de trajet restant d5, d6, d7, d8 en tant que coûts partiels de trajets restants aUK2d45, aUK2d6, aUK2d7, aUK2d8, dans lequel, avant le stockage, on ajoute les coûts de dissemblance aUK2d1, aUK2d2, aUK2d3, aUK2d4 apparaissant sur chacun des trajets restants (R, RU, U, LU) pour les disparités de premiers trajets (d1, d2, d3, d4) aux coûts de premiers trajets stockés (aUK2d1, aUK2d2, aUK2d3, aUK2d4) et on détermine un minimum de premier trajet des coûts de dissemblance kUKd1, kUKd2, kUKd3, kUKd4 ainsi entièrement accumulés sur des premiers trajets (L, LO, O, RO) et des trajets restants (R, RU, U, LU) pour les disparités de premiers trajets (d1, d2, d3, d4) et on le stocke avec la disparité de premier trajet (d1, d2, d3, d4) associée, et lors d'une troisième passe, on ajoute les coûts de dissemblance apparaissant sur chacun des premiers trajets (L, LO, O, RO) pour les disparités de trajets restants d5, d6, d7, d8 aux coûts partiels de trajets restants stockés auK2d5, auK2d6, auK2d7, auK2d8 et on détermine un minimum global et la disparité associée en tant que disparité résultante dmin à partir des coûts de dissemblance ainsi entièrement accumulés kUKd5, kUKd6, kUKd7, kUKd8 sur des premiers trajets (L, LO, O, RO) et des trajets restants (R, RU, U, LU) pour la disparité de trajet restant d5, d6, d7, d8, et du minimum de premier trajet.

4. Procédé selon la revendication 3, **caractérisé en ce que** la deuxième quantité N de disparités contient en outre au moins une disparité voisine de premier trajet, qui est voisine de la disparité de premier trajet, et au moins une disparité voisine de trajet restant, qui est voisine de la disparité de trajet restant,
dans lequel, après la première passe, pour chaque premier trajet, on détermine au moins une disparité voisine de premier trajet, qui est voisine de la disparité de premier trajet, et on l'intègre à la deuxième quantité N de disparités et on stocke en outre les coûts de dissemblance accumulés sur chacun des premiers trajets pour au moins une disparité voisine de premier trajet, qui est voisine du premier trajet, en tant que coûts voisins de premiers trajets et, après la deuxième passe, pour chaque trajet restant, on détermine au moins une disparité voisine de trajet restant, qui est voisine de la disparité de trajet restant, et on l'intègre à la deuxième quantité N de disparités et on stocke en outre les coûts de dissemblance accumulés sur chacun des trajets restants pour au moins une disparité voisine de trajet restant qui est voisine de la disparité de trajet restant, dans lequel, avant le stockage, on ajoute les coûts de dissemblance apparaissant sur chacun des trajets restants, pour les disparités voisines de premiers trajets, aux coûts voisins de premiers trajets stockés et on détermine le minimum de premier trajet à partir des coûts de dissemblance entièrement accumulés sur des premiers trajets et des trajets restants, pour les disparités de premiers trajets et les disparités voisines de premiers trajets et on le stocke, et, lors d'une troisième passe, on ajoute en outre les coûts de dissemblance apparaissant sur chacun des premiers trajets, pour les disparités voisines de premiers trajets, aux coûts voisins de trajets restants stockés et on détermine un minimum global et la disparité associée en tant que disparité résultante à partir des coûts de dissemblance ainsi entièrement accumulés sur des premiers trajets et des trajets restants pour les disparités de trajets restants et les disparités voisines de trajets restants, et du minimum de premier trajet.

5. Procédé selon la revendication 3, **caractérisé en ce que** la deuxième quantité N de disparités contient au moins une première disparité résultante dmin' et au moins une disparité voisine dmin1, qui est voisine de la première disparité résultante dmin', dans lequel, après détermination du minium global et de la disparité résultante dmin', après la troisième passe, on stocke en outre le minimum global en tant que premier minimum global, la disparité résultante dmin en tant que première disparité résultante dmin' et les coûts de dissemblance accumulés sur chacun des premiers trajets pour au moins la disparité voisine dmin1, qui est voisine de la première disparité résultante dmin', en tant que coûts partiels voisins et, après une quatrième passe, on ajoute les coûts de dissemblance accumulés sur chacun des trajets restants pour la disparité voisine dmin1 aux coûts partiels voisins et on détermine à partir des coûts de dissemblance ainsi entièrement accumulés sur des premiers trajets et des trajets restants, pour la disparité voisine dmin1 et du premier minimum global, un deuxième minimum global et la disparité associée en tant que deuxième disparité résultante dmin.

6. Procédé selon la revendication 1, **caractérisé en ce que** la deuxième quantité N de disparités contient une disparité de premier trajet résultante d1min et une disparité de trajet restant résultante d2min, dans lequel, après la première passe, pour chacun des premiers trajets, on détermine la disparité de premier trajet pour laquelle les coûts de dissemblance dépendants du trajet respectifs sont minimum et les coûts de dissemblance accumulés sur chacun des premiers trajets, pour la disparité de premier trajet, en tant que coûts de premiers trajets, dans lequel on détermine et on stocke le minimum des coûts de premiers trajets et on stocke la disparité associée en tant que disparité de premier trajet résultante d1min et on l'intègre à la deuxième quantité N de disparités et, lors d'une deuxième passe, pour chacun des trajets restants, on détermine la disparité de trajet restant pour laquelle les coûts de dissemblance dépendants du trajet respectifs sont minimum et les coûts de dissemblance accumulés sur chacun des trajets restants pour la disparité de trajet restant, dans lequel on détermine et on stocke le minimum des coûts de trajets restants et on stocke la disparité associée en tant que disparité de trajet restant résultante et on l'intègre à la deuxième quantité N de disparités, dans lequel, avant le stockage, on ajoute les coûts de dissemblance apparaissant sur chacun des trajets restants pour la disparité de trajet restant résultante au minimum des coûts partiels de premiers trajets et on stocke les coûts de dissemblance ainsi entièrement accumulés sur des premiers trajets et des trajets restants, pour la disparité de premier trajet résultante, en tant que minimum de premier trajet et, lors d'une troisième passe, on ajoute les coûts de dissemblance apparaissant sur chacun des premiers trajets, pour la disparité de premier trajet résultante, au minimum des coûts partiels de trajets restants et on détermine un minimum global et la disparité associée en tant que disparité résultante dmin à partir des coûts de dissemblance ainsi entièrement accumulés sur des premiers trajets et des trajets restants, pour la disparité de trajet restant résultante, et du minimum de premier trajet.

7. Procédé selon la revendication 6, **caractérisé en ce que** la deuxième quantité N de disparités contient en outre au moins une disparité d1min1, voisine de la disparité de premier trajet résultante d1min et au moins une disparité d2min1, voisine de la disparité de trajet restant résultante d2min, dans lequel, après la première passe, on détermine en outre au moins une disparité d1min1, voisine de la disparité de premier trajet d1min résultante et on l'intègre à la deuxième quantité N de disparités et on stocke des coûts de dissemblance accumulés sur chacun des premiers trajets, pour la disparité d1min1, voisine de la disparité de premier trajet résultante d1min, en tant que coûts partiels voisins de premiers trajets aUK1d1min1 et, après la deuxième passe, on détermine en outre au moins une disparité d2min1, voisine de la disparité de trajet restant d2min résultante, et on l'intègre à la deuxième quantité N de disparités, et on stocke les coûts de dissemblance accumulés sur chacun des trajets restants, pour la disparité d2min1, voisine de la disparité de trajet restant résultante d2min1, en tant que coûts partiels voisins de trajets restants aUK2d2min1, dans lequel, avant le stockage, on ajoute en outre les coûts de dissemblance UK2d1min1 apparaissant sur chacun des trajets restants pour la disparité d1min1, voisine de la disparité de premier trajet résultante d1min, aux coûts partiels voisins de premiers trajets aUK1d1min1 et on détermine le minimum de premier trajet à partir des coûts de dissemblance ainsi entièrement accumulés sur des premiers trajets et des trajets restants, pour la disparité de premier trajet résultante d1min et pour la disparité d1min1, voisine de la disparité de premier trajet résultante d1min, et on la stocke avec la disparité associée et, lors d'une troisième passe, on ajoute en outre les coûts de dissemblance UK1d2min1 apparaissant sur chacun des premiers trajets pour la disparité d2min1, voisine de la disparité de trajet restant résultante d2min, aux coûts partiels voisins de trajets restants aUK2d2min1 et on détermine un minimum global et la disparité associée en tant que disparité résultante dmin à partir des coûts de dissemblance ainsi entièrement accumulés sur des premiers trajets et des trajets restants, pour la disparité de trajet restant résultante d2min et pour la disparité d2min1, voisine de la disparité de trajet restant résultante d2min, et du minimum de premier trajet.

8. Procédé selon l'une quelconque des revendications précédentes, **caractérisé en ce qu'**avant au moins une opération d'écriture en mémoire, il se produit une compression des données à stocker et **en ce qu'**après l'opération de lecture de mémoire, qui lit les données stockées lors de l'opération d'écriture en mémoire, il se produit une décompression des données stockées.

9. Dispositif (1) de réduction de la mémoire de travail temporaire lors de la détermination de valeurs de disparité d'au moins deux images acquises de manière stéréoscopique (B1', B2') présentant une géométrie épipolaire connue, comprenant au moins une unité de mémoire (2) et une unité de calcul (3) connectée par une liaison de données à l'unité de mémoire, dans lequel, pour chaque pixel (P1) d'une première image (B1'), on détermine une disparité dmin, en calculant et en comparant, pour un nombre K de trajets conduisant au pixel (P1), en au moins deux passes, des coûts de dissemblance dépendants du trajet à l'aide d'une fonction de coût dépendante de la disparité, dans lequel la fonction de coût dépendante de la disparité évalue au moins une mesure de dissemblance basée sur des pixels entre le pixel (P1) et le pixel (P2) correspondant d'une deuxième image (B2'), selon la disparité respective, dans lequel, lors d'une première passe, pour un nombre k1 = 1...M de premiers trajets (L, LO, O, RO) et lors d'une deuxième passe, pour un nombre k2 = M+1...K de trajets restants (R, RU, U, LU), on calcule les coûts de dissemblance dépendants du trajet pour une première quantité prédéterminée (D) de disparités et, pour une deuxième quantité prédéterminée N de disparités, on accumule les coûts de dissemblance dépendants du trajet correspondants des premiers trajets (L, LO, O, RO) et des trajets restants (R, RU, U, LU), dans lequel la disparité résultante dmin est déterminée en tant que disparité pour laquelle une accumulation de coûts de dissemblance dépendants du trajet présente un minimum,
dans lequel la deuxième quantité N de disparités est inférieure à la première quantité prédéterminée (D) de disparités, et dans lequel la deuxième quantité N de disparités contient au moins une disparité pour laquelle les coûts de dissemblance dépendants du trajet d'au moins un premier trajet (L, LO, O, RO) présentent un minimum des coûts de dissemblance dépendants du trajet, et une disparité pour laquelle les coûts de dissemblance dépendants du trajet d'au moins un trajet restant (R, RU, U, LU) présentent un minimum des coûts de dissemblance dépendants du trajet, ou la deuxième quantité N de disparités contient au moins une disparité qui s'écarte de manière prédéterminée d'une disparité pour laquelle les coûts de dissemblance dépendants du trajet d'au moins un premier trajet (L, LO, O, RO) présentent un minimum des coûts de dissemblance dépendants du trajet et/ou une disparité qui s'écarte de manière prédéterminée d'une disparité pour laquelle les coûts de dissemblance dépendants du trajet d'au moins un trajet restant (R, RU, U, LU) présentent un minimum des coûts de dissemblance dépendants du trajet, et dans lequel l'accumulation de coûts de dissemblance dépendants du trajet correspondants s'effectue pour une deuxième quantité prédéterminée N de disparités à la suite de la première passe.
